# EUROPEAN PATENT APPLICATION

(11) **EP 4 823 159 A1**
(43) Date of publication of application: **14.10.2026**
(21) Application number: 24911071.9
(22) Date of filing: 23.12.2024
(51) Int. Cl.: H04W 24/08

(54) **BEAM MEASUREMENT METHOD AND APPARATUS**

(30) Priority: 27.12.2023 CN 202311836112
(71) Applicant: Huawei Technologies Co., Ltd., Shenzhen, Guangdong 518129 (CN)
(72) Inventor: LIU, Yong, Shenzhen, Guangdong 518129 (CN); BI, Xiaoyan, Shenzhen, Guangdong 518129 (CN)
(74) Representative: Epping - Hermann - Fischer
(86) International application number: PCT/CN2024/141622
(87) International publication number: WO 2025/140144

(57) **Abstract**

This application discloses a beam measurement method and an apparatus. This application may be applied to a RIS-based communication enhancement scenario. The method includes: receiving a plurality of measurement reference signals sent by a transmitting end via a RIS; determining a target beam based on a first beam direction and measurement results of the plurality of measurement reference signals, where the first beam direction is determined based on a relative position and/or a relative direction between the transmitting end and the RIS; and sending a measurement result of the target beam. The target beam is determined based on the first beam direction and the measurement results of the plurality of measurement reference signals, and the determined target beam is better than a beam with highest received power. Therefore, in a beam measurement process, the measurement result of the target beam is sent to the transmitting end, so that impact on transmission performance caused by false feedback of a sidelobe beam (a beam with highest received power) can be avoided, thereby improving beam measurement and transmission performance.

## Description

This application claims priority to Chinese Patent Application No. 202311836112.6, filed with the China National Intellectual Property Administration on December 27, 2023 and entitled "BEAM MEASUREMENT METHOD AND APPARATUS", which is incorporated herein by reference in its entirety.

### TECHNICAL FIELD

This application relates to the field of communication technologies, and in particular, to a beam measurement method and an apparatus.

### BACKGROUND

Throughout the evolution of wireless communication systems, sustaining high throughput and massive connectivity have always been core challenges and pursuit objectives for wireless communication networks. To address the foregoing challenges, various technological innovations have emerged. However, the increasingly complex systems face challenges of implementation complexity, system energy consumption, and enhanced utilization and control of spatial channels.

To address the foregoing challenges, reconfigurable intelligent surface (reconfigurable intelligent surface, RIS), also referred to as intelligent reflecting surface (intelligent reflecting surface, IRS) or large intelligent surface (large intelligent surface, LIS), has emerged as a highly promising technology and has attracted extensive research interest. RIS is an artificial two-dimensional material of a sub-wavelength size, typically composed of metals, dielectrics, and tunable elements. Specifically, RIS is represented as an intelligent surface including a plurality of elements, and each element is a low-cost passive reflective element. Through flexibly configuration of amplitudes and phases of each element, wireless channel fading can be controlled, and an expected directional beam can be formed. RIS can be mounted on large surfaces (for example, indoor walls or ceilings, or outdoor buildings or signs) to reflect radio frequency (radio frequency, RF) energy around obstacles and create a virtual line-of-sight propagation path between a communication source and a communication target.

Beam scanning is one of the fundamental requirements for wireless mobile communication and radars. RIS can implement beam scanning by using reconfigurable phase distribution. As a simplest phase compensation, a 1-bit phase-compensated RIS unit (that is, an element) requires only two switchable states (typically with a 180° phase difference), to implement beamforming of an electromagnetic wave. Compared with 2-bit and higher-bit phase-compensated RIS units, the 1-bit RIS unit has a simpler structure, and only a few switches (for example, switching diodes) are required to switch a state of the RIS unit, which has the least complexity on control-line routing. Therefore, a 1-bit RIS (that is, a RIS composed of 1-bit phase-compensated RIS units) can greatly reduce costs and losses caused by the switches, and can also greatly simplify design of a control circuit. However, using the 1-bit RIS also comes with a cost: tunable phase freedom of the 1-bit RIS is extremely limited, which may lead to a very high sidelobe during beam scanning and may even generate a beam symmetric to a main lobe.

### SUMMARY

This application discloses a beam measurement method and an apparatus, to avoid impact on transmission performance caused by false feedback of a sidelobe beam in a beam measurement process, thereby improving beam measurement and transmission performance.

According to a first aspect, an embodiment of this application provides a beam measurement method. The method includes: receiving a plurality of measurement reference signals sent by a transmitting end via a reconfigurable intelligent surface (reconfigurable intelligent surface, RIS); determining a target beam based on a first beam direction and measurement results of the plurality of measurement reference signals, where the first beam direction is determined based on a relative position and/or a relative direction between the transmitting end and the RIS; and sending a measurement result of the target beam. In this application, receiving the plurality of measurement reference signals sent by the transmitting end via the RIS may be replaced with: receiving the plurality of measurement reference signals from the transmitting end via the RIS. The target beam may be a relatively optimal beam that can be used by the transmitting end to send a signal to the receiving end. For example, the target beam may be an optimal beam (that is, a main lobe beam) that can be used by the transmitting end to send a signal to the receiving end, that is, a beam that enables the receiving end to obtain a best received signal. In this application, a relatively optimal beam is a relatively optimal beam that may be used by the transmitting end to send a signal to the receiving end, for example, an optimal beam. Alternatively, the target beam may be a beam whose reference signal received power (reference signal received power, RSRP) or signal-to-noise ratio (signal-to-noise ratio, SNR) of a signal received by the receiving end exceeds a preset threshold when the transmitting end sends the signal to the receiving end under given transmit power. The preset threshold may be set based on an actual requirement, and is not limited herein.

In this embodiment of this application, the target beam is determined based on the first beam direction and the measurement results of the plurality of measurement reference signals, and the determined target beam is better than a beam with highest received power. Therefore, in a beam measurement process, the measurement result of the target beam is sent, so that impact on transmission performance caused by false feedback of a sidelobe beam (a beam with highest received power) can be avoided, thereby improving beam measurement and transmission performance.

In a possible implementation, the measurement result of the target beam includes information identifying the target beam, that is, identification information of the target beam. The information identifying the target beam may be an index of the target beam, an angle vector, an index of a codeword corresponding to the target beam, or the like.

In this implementation, the measurement result of the target beam includes information identifying the target beam, so that the transmitting end determines the target beam.

In a possible implementation, an included angle between the first beam direction and a normal direction of the RIS is equal to an included angle between an incident beam direction (which may be briefly referred to as an incident direction below) of a transmit beam of the transmitting end and the normal direction of the RIS, or a difference between the included angle between the first beam direction and the normal direction of the RIS and the included angle between the incident direction of the transmit beam of the transmitting end and the normal direction of the RIS is less than or equal to a preset value, or the first beam direction and the incident direction of the transmit beam of the transmitting end are symmetric with respect to the normal direction of the RIS.

In this implementation, the first beam direction may be determined based on the incident direction of the transmit beam of the transmitting end and the normal direction of the RIS.

In a possible implementation, before determining the target beam based on the first beam direction and the measurement results of the plurality of measurement reference signals, the method further includes: receiving first indication information from the transmitting end or the RIS, where the first indication information indicates at least one of the relative position and the relative direction between the transmitting end and the RIS, or the first indication information indicates at least one of an azimuth of the RIS, a panel orientation of the RIS, a height of the RIS, a panel pitch angle of the RIS, or a distance between the RIS and the transmitting end; or the first indication information indicates the incident direction of the transmit beam of the transmitting end and the normal direction of the RIS; and determining the first beam direction based on the first indication information.

In this implementation, the first beam direction is determined based on the first indication information, and the target beam is determined based on the first beam direction and the measurement results of the plurality of measurement reference signals. In addition, because a serving RIS of the receiving end may be switched and/or at least one of the relative position and the relative direction between the transmitting end and the RIS may change, the first beam direction is determined based on the first indication information, so that it can be ensured that the first beam direction is determined based on accurate information.

In a possible implementation, before receiving the first indication information from the transmitting end or the RIS, the method further includes: sending a first trigger request to the transmitting end or the RIS. The first trigger request is for triggering the transmitting end or the RIS to send the first indication information.

In this implementation, the first trigger request is sent to the transmitting end or the RIS, to obtain information for determining the first beam direction.

In a possible implementation, sending the first trigger request to the transmitting end or the RIS includes: sending the first trigger request to the transmitting end or the RIS based on reception performance or a mobility status of a receiving end; or sending the first trigger request to the transmitting end or the RIS when a receiving end determines that beam scanning needs to be performed.

When the reception performance or the mobility status of the receiving end undergoes a significant change (for example, an SNR of a received signal of the receiving end is lower than a specific threshold or a moving speed of the receiving end exceeds a specific threshold), such a change is usually caused by a change in at least one of the relative position and the relative direction between the transmitting end and the RIS. The first trigger request is sent to the transmitting end or the RIS based on the reception performance or the mobility status of the receiving end, and at least one of a current relative position and a current relative direction between the transmitting end and the RIS may be obtained in a timely manner. When determining that beam scanning needs to be performed, the receiving end sends the first trigger request to the transmitting end or the RIS, so that the information for determining the first beam direction can be obtained in a timely manner.

In a possible implementation, before receiving the first indication information from the transmitting end or the RIS, the method further includes: determining the first beam direction based on fourth indication information. The fourth indication information indicates at least one of the relative position and the relative direction between the transmitting end and the RIS. Alternatively, the fourth indication information indicates at least one of the azimuth of the RIS, the panel orientation of the RIS, the height of the RIS, the panel pitch angle of the RIS, or the distance between the RIS and the transmitting end. Alternatively, the fourth indication information indicates the incident direction of the transmit beam of the transmitting end and the normal direction of the RIS.

In this implementation, the first beam direction is determined based on the fourth indication information, and the target beam is determined based on the first beam direction and the measurement results of the plurality of measurement reference signals.

In a possible implementation, before determining the target beam based on the first beam direction and the measurement results of the plurality of measurement reference signals, the method further includes: receiving second indication information from the transmitting end or the RIS. The second indication information indicates the first beam direction.

In this implementation, the first beam direction may be obtained by receiving the second indication information from the transmitting end or the RIS.

In a possible implementation, before receiving the second indication information from the transmitting end or the RIS, the method further includes: sending a second trigger request to the transmitting end or the RIS. The second trigger request is for triggering the transmitting end or the RIS to send the second indication information.

In this implementation, the second trigger request is sent to the transmitting end or the RIS, to obtain the information for determining the first beam direction.

In a possible implementation, sending the second trigger request to the transmitting end or the RIS includes: sending the second trigger request to the transmitting end or the RIS based on reception performance or a mobility status of a receiving end; or sending the second trigger request to the transmitting end or the RIS when the receiving end determines that beam scanning is to be performed.

When the reception performance or the mobility status of the receiving end undergoes a significant change (for example, an SNR of a received signal of the receiving end is lower than a specific threshold or a moving speed of the receiving end exceeds a specific threshold), such a change is usually caused by a change in at least one of the relative position and the relative direction between the transmitting end and the RIS. The second trigger request is sent to the transmitting end or the RIS based on the reception performance or the mobility status of the receiving end, and at least one of a current relative position and a current relative direction between the transmitting end and the RIS may be obtained in a timely manner. When determining that beam scanning needs to be performed, the receiving end sends the second trigger request to the transmitting end or the RIS, so that information for determining the first beam direction can be obtained in a timely manner.

In a possible implementation, determining the target beam based on the first beam direction and the measurement results of the plurality of measurement reference signals includes: determining the target beam based on the measurement results of the plurality of measurement reference signals, the first beam direction, and an order in which the transmitting end sends the plurality of measurement reference signals.

In this implementation, the target beam may be determined, and the target beam is identified.

In a possible implementation, determining the target beam based on the measurement results of the plurality of measurement reference signals, the first beam direction, the order in which the transmitting end sends the plurality of measurement reference signals, and the relative position relationship between the receiving end and the RIS includes: determining, based on the first beam direction, an angular region to which the target beam belongs; and determining, from a plurality of beams associated with the plurality of measurement reference signals, a beam that is located within the angular region and whose first performance metric is greater than or equal to a target threshold as the target beam. In this application, the first performance metric may be RSRP, an SNR, or another indicator used to measure beam quality. The target threshold may be set based on an actual requirement. This is not limited herein.

In this implementation, a relatively optimal beam in a plurality of beams associated with the plurality of measurement reference signals is determined as the target beam.

In a possible implementation, determining the target beam based on the measurement results of the plurality of measurement reference signals, the first beam direction, the order in which the transmitting end sends the plurality of measurement reference signals, and the relative position relationship between the receiving end and the RIS includes: determining, based on the first beam direction, an angular region to which the target beam belongs; and determining, from a plurality of beams associated with the plurality of measurement reference signals, a beam that is located within the angular region with an optimal first performance metric as the target beam.

In a possible implementation, determining the target beam based on the measurement results of the plurality of measurement reference signals for the receiving end, the first beam direction, and the order in which the transmitting end sends the plurality of measurement reference signals includes: determining the target beam based on the measurement results of the plurality of measurement reference signals, the first beam direction, the order in which the transmitting end sends the plurality of measurement reference signals, and a relative position relationship between the receiving end and the RIS.

In this implementation, the target beam may be accurately determined, and the target beam is identified.

In a possible implementation, determining the target beam based on the measurement results of the plurality of measurement reference signals, the first beam direction, the order in which the transmitting end sends the plurality of measurement reference signals, and the relative position relationship between the receiving end and the RIS includes: determining, based on the first beam direction and the relative position relationship, an angular region to which the target beam belongs; and determining, from a plurality of beams associated with the plurality of measurement reference signals, a beam that is located within the angular region and whose first performance metric is greater than or equal to a target threshold as the target beam.

In a possible implementation, determining the target beam based on the measurement results of the plurality of measurement reference signals, the first beam direction, the order in which the transmitting end sends the plurality of measurement reference signals, and the relative position relationship between the receiving end and the RIS includes: determining, based on the first beam direction and the relative position relationship, an angular region to which the target beam belongs; and determining, from a plurality of beams associated with the plurality of measurement reference signals, a beam that is located within the angular region with an optimal first performance metric as the target beam.

In a possible implementation, the method further includes: receiving third indication information from the transmitting end. The third indication information indicates the order in which the transmitting end sends the plurality of measurement reference signals or measurement beams. Optionally, the measurement result of the target beam includes information identifying the target beam. The information identifying the target beam is an order in which the transmitting end sends measurement reference signals corresponding to target beam among the plurality of measurement reference signals. Alternatively, the information identifying the target beam is an order of target beams in the measurement beams. In other words, the index of the target beam is an order of the measurement reference signals corresponding to the target beam in the order in which the transmitting end sends the plurality of measurement reference signals.

In this implementation, the third indication information is received from the transmitting end, so that the information identifying the target beam is determined based on the order in which the transmitting end sends the plurality of measurement reference signals.

In a possible implementation, the third indication information further indicates a mode in which the receiving end performs beam measurement. For example, a mode in which the receiving end performs beam measurement includes at least a conventional mode and a target mode. When operating in the conventional mode, the receiving end feeds back a beam with highest power. When operating in the target mode, the receiving end determines the target beam based on the first beam direction and the measurement results of the plurality of measurement reference signals, and feeds back the target beam. In the conventional mode, the receiving end does not need to determine the target beam based on the first beam direction and the measurement results of the plurality of measurement reference signals. In the target mode, the receiving end needs to determine and feed back the target beam, and the measurement result of the target beam includes the information identifying the target beam, for example, an index of the target beam, an angle vector, an index of a codeword corresponding to the target beam, or the like. For example, the target beam may be a relatively optimal beam (that is, a main lobe beam) that can be used by the transmitting end to send a signal to the receiving end, that is, a beam that enables the receiving end to obtain a best received signal. In a possible implementation, in the conventional mode, the receiving end does not need to distinguish between the main lobe beam and the sidelobe beam, that is, performs screening on main lobe beam information and grating lobe beam information, and needs to select and report a beam with highest received power. In the target mode, the receiving end needs to distinguish between the main lobe beam and the sidelobe beam, that is, performs screening on main lobe beam information and grating lobe beam information, and determines and reports the target beam based on the first beam direction. In other words, in the target mode, the target beam reported by the receiving end is definitely a main lobe beam. In the conventional mode, a measurement beam reported by the receiving end may be a sidelobe beam. Names of the conventional mode and target mode are not limited. For example, the conventional mode may be named a first mode, and the target mode may be named a second mode.

In this implementation, the third indication information may implicitly indicate a mode in which the receiving end performs beam measurement, so that signaling overheads can be reduced.

In a possible implementation, the order in which the transmitting end sends the plurality of measurement reference signals to the receiving end is an order of codewords in a scanning codebook used by the receiving end, and one codeword in the scanning codebook corresponds to one of the plurality of measurement reference signals.

In this implementation, the order in which the transmitting end sends the plurality of measurement reference signals to the receiving end is an order of codewords in a scanning codebook used by the receiving end, so that the order in which the transmitting end sends the plurality of measurement reference signals to the receiving end can be conveniently exchanged, and signaling overheads are reduced.

In a possible implementation, the method further includes: receiving fifth indication information from the transmitting end, where the fifth indication information indicates a mode in which the receiving end performs beam measurement. Determining the target beam based on the first beam direction and the measurement results of the plurality of measurement reference signals includes: determining, in response to the fifth indication information, the target beam based on the first beam direction and the measurement results of the plurality of measurement reference signals.

In this implementation, in response to the fifth indication information, the target beam is determined based on the first beam direction and the measurement results of the plurality of measurement reference signals, and beam measurement may be performed in a mode for beam measurement indicated by the transmitting end to receiving end.

According to a second aspect, an embodiment of this application provides an information indication method. The method includes: generating first indication information, where the first indication information indicates at least one of a relative position and a relative direction between a transmitting end and a RIS; or the first indication information indicates at least one of an azimuth of the RIS, a panel orientation of the RIS, a height of the RIS, a panel pitch angle of the RIS, or a distance between the RIS and the transmitting end; or the first indication information indicates an incident direction of a transmit beam of the transmitting end and a normal direction of the RIS; and sending the first indication information to a receiving end. Optionally, the first indication information is used to determine a first beam direction. The first beam direction is used by the receiving end to determine a target beam (for example, a main lobe beam) based on measurement results of a plurality of measurement reference signals that are sent by the transmitting end to the receiving end via the RIS. Alternatively, the first indication information indicates an incident direction of a transmit beam of the transmitting end and a normal direction of the RIS.

In this embodiment of this application, the first indication information is sent to the receiving end, so that the receiving end determines the first beam direction based on the first indication information, and then determines the target beam based on the first beam direction and the measurement results of the plurality of measurement reference signals that are sent by the transmitting end to the receiving end via the RIS. This can avoid impact on transmission performance caused by false feedback of a sidelobe beam, thereby improving beam measurement and transmission performance. In a possible implementation, before sending the first indication information to the receiving end, the method further includes: receiving a first trigger request from the receiving end; and sending the first indication information to the receiving end in response to the first trigger request.

In this implementation, the first indication information is sent to the receiving end in response to the first trigger request. This can reduce signaling overheads and avoid the receiving end lacking the first indication information.

In a possible implementation, sending the first indication information to the receiving end includes: sending the first indication information to the receiving end when topological configuration information of the RIS changes or a RIS serving the receiving end is switched to the RIS. The topological configuration information of the RIS may include at least one of the azimuth of the RIS, the panel orientation of the RIS, the height of the RIS, the panel pitch angle of the RIS, the normal direction of the RIS, or the distance between the RIS and the transmitting end.

In this implementation, when the topological configuration information of the RIS changes or a RIS serving the receiving end is switched to the RIS, the first indication information is sent to the receiving end. In this way, the receiving end can obtain in a timely manner at least one of the current relative position and the current relative direction between the transmitting end and the RIS, or at least one of a current azimuth of the RIS, a current panel orientation of the RIS, a current height of the RIS, a current panel pitch angle of the RIS, or a current distance between the RIS and the transmitting end.

In a possible implementation, the method further includes: sending third indication information to the receiving end. The third indication information indicates an order in which the transmitting end sends the plurality of measurement reference signals. Optionally, a measurement result of the target beam includes information identifying the target beam. The information identifying the target beam is an order of the measurement reference signals corresponding to the target beam in the order in which the transmitting end sends the plurality of measurement reference signals. In other words, an index of the target beam is an order of the measurement reference signals corresponding to the target beam in the order in which the transmitting end sends the plurality of measurement reference signals.

In this implementation, the third indication information is received from the transmitting end, so that the information identifying the target beam is determined based on the order in which the transmitting end sends the plurality of measurement reference signals.

In a possible implementation, the third indication information further indicates a mode in which the receiving end performs beam measurement. For example, a mode in which the receiving end performs beam measurement includes at least a conventional mode and a target mode. When operating in the conventional mode, the receiving end feeds back a beam with highest power. When operating in the target mode, the receiving end determines the target beam based on the first beam direction and the measurement results of the plurality of measurement reference signals, and feeds back the target beam.

In this implementation, the third indication information may implicitly indicate a mode in which the receiving end performs beam measurement, so that signaling overheads can be reduced.

In a possible implementation, the order in which the transmitting end sends the plurality of measurement reference signals to the receiving end is an order of codewords in a scanning codebook used by the receiving end, and one codeword in the scanning codebook corresponds to one of the plurality of measurement reference signals.

In this implementation, the order in which the transmitting end sends the plurality of measurement reference signals to the receiving end is an order of codewords in a scanning codebook used by the receiving end, so that the order in which the transmitting end sends the plurality of measurement reference signals to the receiving end can be conveniently exchanged, and signaling overheads are reduced.

In a possible implementation, the method further includes: sending the plurality of measurement reference signals to the receiving end via the RIS; and receiving the measurement result of the target beam from the receiving end. The measurement result of the target beam includes the information identifying the target beam. Optionally, the target beam is determined by the receiving end based on the first beam direction and the measurement results of the plurality of measurement reference signals, and the first indication information is used to determine the first beam direction. The target beam may be a beam whose RSRP of a signal received by the receiving end exceeds a preset threshold when the transmitting end sends the signal to the receiving end under given transmit power. The preset threshold may be set based on an actual requirement, and is not limited herein. For example, the target beam is a main lobe beam. In this implementation, the measurement result of the target beam is received from the receiving end, where the measurement result of the target beam includes the information identifying the target beam; and the target beam is selected to send data to the receiving end, so that transmission performance can be improved.

In a possible implementation, the method further includes: sending fifth indication information to the receiving end, where the fifth indication information indicates a mode in which the receiving end performs beam measurement. For example, the fifth indication information indicates the receiving end to perform beam measurement in the target mode. When operating in the target mode, the receiving end determines the target beam based on the first beam direction and the measurement results of the plurality of measurement reference signals, and feeds back the target beam. The first beam direction is determined based on a relative position and/or a relative direction between the transmitting end and the RIS.

In this implementation, the fifth indication information is sent to the receiving end, so that the receiving end performs beam measurement in a corresponding mode, that is, feeds back the measurement result of the target beam, thereby improving transmission performance.

According to a third aspect, an embodiment of this application provides another information indication method. The method includes: generating second indication information, where the second indication information indicates a first beam direction, the first beam direction is determined based on a relative position and/or a relative direction between a transmitting end and a RIS, and the first beam direction is used by a receiving end to determine a target beam based on measurement results of a plurality of measurement reference signals sent by the transmitting end to the receiving end via the RIS; and sending the second indication information to the receiving end.

In this embodiment of this application, the second indication information is sent to the receiving end, so that the receiving end obtains the first beam direction based on the second indication information, and then determines the target beam based on the first beam direction and the measurement results of the plurality of measurement reference signals that are sent by the transmitting end to the receiving end via the RIS. This can avoid impact on transmission performance caused by false feedback of a sidelobe beam, thereby improving beam measurement and transmission performance.

In a possible implementation, before sending the second indication information to the receiving end, the method further includes: receiving a second trigger request from the receiving end. Sending the second indication information to the receiving end includes: sending the second indication information to the receiving end in response to the second trigger request.

In this implementation, the second indication information is sent to the receiving end in response to the second trigger request. This can reduce signaling overheads and avoid the receiving end lacking the second indication information. In a possible implementation, sending the second indication information to the receiving end includes: sending the second indication information to the receiving end when topological configuration information of the RIS changes or a RIS serving the receiving end is switched to the RIS. The topological configuration information of the RIS may include at least one of an azimuth of the RIS, a panel orientation of the RIS, a height of the RIS, a panel pitch angle of the RIS, or a distance between the RIS and the transmitting end.

When the topological configuration information of the RIS changes or a RIS serving the receiving end is switched, the first beam direction also changes accordingly. In this implementation, when the topological configuration information of the RIS changes or a RIS serving the receiving end is switched to the RIS, the second indication information is sent to the receiving end, so that the receiving end can indicate an updated first beam direction in a timely manner.

In a possible implementation, the method further includes: sending third indication information to the receiving end. The third indication information indicates an order in which the transmitting end sends the plurality of measurement reference signals. Optionally, a measurement result of the target beam includes information identifying the target beam. The information identifying the target beam is an order of the measurement reference signals corresponding to the target beam in the order in which the transmitting end sends the plurality of measurement reference signals. In other words, an index of the target beam is an order of the measurement reference signals corresponding to the target beam in the order in which the transmitting end sends the plurality of measurement reference signals.

In this implementation, the third indication information is received from the transmitting end, so that the information identifying the target beam is determined based on the order in which the transmitting end sends the plurality of measurement reference signals.

In a possible implementation, the third indication information further indicates a mode in which the receiving end performs beam measurement. For example, a mode in which the receiving end performs beam measurement includes at least a conventional mode and a target mode. When operating in the conventional mode, the receiving end feeds back a beam with highest power. When operating in the target mode, the receiving end determines the target beam based on the first beam direction and the measurement results of the plurality of measurement reference signals, and feeds back the target beam.

In this implementation, the third indication information may implicitly indicate a mode in which the receiving end performs beam measurement, so that signaling overheads can be reduced.

In a possible implementation, the order in which the transmitting end sends the plurality of measurement reference signals to the receiving end is an order of codewords in a scanning codebook used by the receiving end, and one codeword in the scanning codebook corresponds to one of the plurality of measurement reference signals.

In this implementation, the order in which the transmitting end sends the plurality of measurement reference signals to the receiving end is an order of codewords in a scanning codebook used by the receiving end, so that the order in which the transmitting end sends the plurality of measurement reference signals to the receiving end can be conveniently exchanged, and signaling overheads are reduced.

In a possible implementation, the method further includes: sending the plurality of measurement reference signals to the receiving end via the RIS; and receiving the measurement result of the target beam from the receiving end. The measurement result of the target beam includes the information identifying the target beam. Optionally, the target beam is determined by the receiving end based on the first beam direction and the measurement results of the plurality of measurement reference signals, and the first indication information is used to determine the first beam direction. The target beam may be a beam whose RSRP of a signal received by the receiving end exceeds a preset threshold when the transmitting end sends the signal to the receiving end under given transmit power. The preset threshold may be set based on an actual requirement, and is not limited herein. For example, the target beam is a main lobe beam. In this implementation, the measurement result of the target beam is received from the receiving end, where the measurement result of the target beam includes the information identifying the target beam; and the target beam is selected to send data to the receiving end, so that transmission performance can be improved.

In a possible implementation, the method further includes: sending fifth indication information to the receiving end, where the fifth indication information indicates a mode in which the receiving end performs beam measurement. For example, the fifth indication information indicates the receiving end to perform beam measurement in the target mode. When operating in the target mode, the receiving end determines the target beam based on the first beam direction and the measurement results of the plurality of measurement reference signals, and feeds back the target beam. The first beam direction is determined based on a relative position and/or a relative direction between the transmitting end and the RIS.

In this implementation, the fifth indication information is sent to the receiving end, so that the receiving end performs beam measurement in a corresponding mode, that is, feeds back the measurement result of the target beam, thereby improving transmission performance.

In a possible implementation, before generating the second indication information, the method further includes: determining the first beam direction based on fourth indication information. The fourth indication information indicates at least one of the relative position and the relative direction between the transmitting end and the RIS. Alternatively, the fourth indication information indicates at least one of the azimuth of the RIS, the panel orientation of the RIS, the height of the RIS, the panel pitch angle of the RIS, or the distance between the RIS and the transmitting end. Alternatively, the fourth indication information indicates the incident direction of the transmit beam of the transmitting end and the normal direction of the RIS.

In this implementation, the first beam direction is determined based on the fourth indication information, and the target beam is determined based on the first beam direction and the measurement results of the plurality of measurement reference signals.

According to a fourth aspect, an embodiment of this application provides a communication apparatus. The communication apparatus has a function of implementing behavior in the method embodiment in the first aspect. The communication apparatus may be a network device, or may be a component (for example, a processor, a chip, or a chip system) of the network device, or may be a logical module or software that can implement all or some functions of the network device. Alternatively, the communication apparatus may be a terminal device, or may be a component (for example, a processor, a chip, or a chip system) of the terminal device, or may be a logical module or software that can implement all or some functions of the terminal device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module. The transceiver module is configured to receive a plurality of measurement reference signals sent by a transmitting end via a RIS. The processing module is configured to determine a target beam based on a first beam direction and measurement results of the plurality of measurement reference signals. The first beam direction is determined based on a relative position and/or a relative direction between the transmitting end and the RIS. The transceiver module is further configured to send a measurement result of the target beam.

In a possible implementation, the transceiver module is further configured to: receive first indication information from the transmitting end or the RIS. The first indication information indicates at least one of the relative position and the relative direction between the transmitting end and the RIS. Alternatively, the first indication information indicates at least one of an azimuth of the RIS, a panel orientation of the RIS, a height of the RIS, a panel pitch angle of the RIS, or a distance between the RIS and the transmitting end. Alternatively, the first indication information indicates an incident direction of a transmit beam of the transmitting end and a normal direction of the RIS. The processing module is configured to determine the first beam direction based on the first indication information.

In a possible implementation, the transceiver module is further configured to send a first trigger request to the transmitting end or the RIS. The first trigger request is for triggering the transmitting end or the RIS to send the first indication information.

In a possible implementation, the processing module is further configured to: control, based on reception performance or a mobility status of a receiving end, the transceiver module to send the first trigger request to the transmitting end or the RIS; or when the receiving end determines that beam scanning needs to be performed, control the transceiver module to send the first trigger request to the transmitting end or the RIS.

In a possible implementation, the processing module is further configured to determine the first beam direction based on fourth indication information. The fourth indication information indicates at least one of the relative position and the relative direction between the transmitting end and the RIS. Alternatively, the fourth indication information indicates at least one of the azimuth of the RIS, the panel orientation of the RIS, the height of the RIS, the panel pitch angle of the RIS, or the distance between the RIS and the transmitting end. Alternatively, the fourth indication information indicates the incident direction of the transmit beam of the transmitting end and the normal direction of the RIS.

In a possible implementation, the transceiver module is further configured to receive second indication information from the transmitting end or the RIS. The second indication information indicates the first beam direction.

In a possible implementation, the transceiver module is further configured to send a second trigger request to the transmitting end or the RIS. The second trigger request is for triggering the transmitting end or the RIS to send the second indication information.

In a possible implementation, the processing module is further configured to: control, based on reception performance or a mobility status of a receiving end, the transceiver module to send the second trigger request to the transmitting end or the RIS; or when the receiving end determines that beam scanning is to be performed, control the transceiver module to send the second trigger request to the transmitting end or the RIS.

In a possible implementation, the processing module is specifically configured to determine the target beam based on the measurement results of the plurality of measurement reference signals, the first beam direction, and an order in which the transmitting end sends the plurality of measurement reference signals.

In a possible implementation, the processing module is specifically configured to: determine, based on the first beam direction, an angular region to which the target beam belongs; and determine, from a plurality of beams associated with the plurality of measurement reference signals, a beam that is located within the angular region and whose first performance metric is greater than or equal to a target threshold as the target beam.

In a possible implementation, the processing module is specifically configured to: determine, based on the first beam direction, an angular region to which the target beam belongs; and determine, from a plurality of beams associated with the plurality of measurement reference signals, a beam that is located within the angular region with an optimal first performance metric as the target beam.

In a possible implementation, the processing module is specifically configured to determine the target beam based on the measurement results of the plurality of measurement reference signals, the first beam direction, the order in which the transmitting end sends the plurality of measurement reference signals, and a relative position relationship between the receiving end and the RIS.

In a possible implementation, the processing module is specifically configured to: determine, based on the first beam direction and the relative position relationship, an angular region to which the target beam belongs; and determine, from a plurality of beams associated with the plurality of measurement reference signals, a beam that is located within the angular region and whose first performance metric is greater than or equal to a target threshold as the target beam. In a possible implementation, the processing module is specifically configured to: determine, based on the first beam direction and the relative position relationship, an angular region to which the target beam belongs; and determine, from a plurality of beams associated with the plurality of measurement reference signals, a beam that is located within the angular region with an optimal first performance metric as the target beam.

In a possible implementation, the transceiver module is further configured to: receive third indication information from the transmitting end. The third indication information indicates the order in which the transmitting end sends the plurality of measurement reference signals.

In a possible implementation, the transceiver module is further configured to receive fifth indication information from the transmitting end, where the fifth indication information indicates a mode in which the receiving end performs beam measurement. The processing module is specifically configured to determine, in response to the fifth indication information, the target beam based on the first beam direction and the measurement results of the plurality of measurement reference signals.

For possible implementations of the communication apparatus in the fourth aspect, refer to the possible implementations of the first aspect.

For technical effect brought by the possible implementations of the fourth aspect, refer to descriptions of technical effects of the first aspect or the possible implementations of the first aspect.

According to a fifth aspect, an embodiment of this application provides a communication apparatus. The communication apparatus has a function of implementing behavior in the method embodiment in the second aspect. The communication apparatus may be a network device, or may be a component (for example, a processor, a chip, or a chip system) of the network device, or may be a logical module or software that can implement all or some functions of the network device. Alternatively, the communication apparatus may be a terminal device, or may be a component (for example, a processor, a chip, or a chip system) of the terminal device, or may be a logical module or software that can implement all or some functions of the terminal device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module. The processing module is configured to generate first indication information. The first indication information indicates at least one of a relative position and a relative direction between a transmitting end and a RIS. Alternatively, the first indication information indicates at least one of an azimuth of the RIS, a panel orientation of the RIS, a height of the RIS, a panel pitch angle of the RIS, or a distance between the RIS and the transmitting end. Alternatively, the first indication information indicates an incident direction of a transmit beam of the transmitting end and a normal direction of the RIS. The transceiver module is configured to send the first indication information to a receiving end.

In a possible implementation, the transceiver module is further configured to receive a first trigger request from the receiving end. The processing module is further configured to control the transceiver module to send the first indication information to the receiving end in response to the first trigger request.

In a possible implementation, the processing module is further configured to: when topological configuration information of the RIS changes or a RIS serving the receiving end is switched to the RIS, control the transceiver module to send the first indication information to the receiving end.

In a possible implementation, the transceiver module is further configured to send third indication information to the receiving end. The third indication information indicates an order in which the transmitting end sends the plurality of measurement reference signals.

In a possible implementation, the transceiver module is further configured to: send the plurality of measurement reference signals to the receiving end via the RIS; and receive the measurement result of the target beam from the receiving end. The measurement result of the target beam includes the information identifying the target beam.

In a possible implementation, the transceiver module is further configured to send fifth indication information to the receiving end, where the fifth indication information indicates a mode in which the receiving end performs beam measurement.

For possible implementations of the communication apparatus in the fifth aspect, refer to the possible implementations of the second aspect.

For technical effects brought by the possible implementations of the fifth aspect, refer to descriptions of the technical effects of the second aspect or the possible implementations of the second aspect.

According to a sixth aspect, an embodiment of this application provides a communication apparatus. The communication apparatus has a function of implementing a behavior in the method embodiment in the third aspect. The communication apparatus may be a network device, or may be a component (for example, a processor, a chip, or a chip system) of the network device, or may be a logical module or software that can implement all or some functions of the network device. Alternatively, the communication apparatus may be a terminal device, or may be a component (for example, a processor, a chip, or a chip system) of the terminal device, or may be a logical module or software that can implement all or some functions of the terminal device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module. The processing module is configured to generate second indication information. The second indication information indicates a first beam direction, the first beam direction is determined based on a relative position and/or a relative direction between a transmitting end and a RIS, and the first beam direction is used by a receiving end to determine a target beam based on measurement results of a plurality of measurement reference signals sent by the transmitting end to the receiving end via the RIS. The transceiver module is configured to send the second indication information to a receiving end. In a possible implementation, the transceiver module is further configured to receive a second trigger request from the receiving end. The processing module is further configured to control the transceiver module to send the second indication information to the receiving end in response to the second trigger request.

In a possible implementation, the transceiver module is further configured to: when topological configuration information of the RIS changes or a RIS serving the receiving end is switched to the RIS, control the transceiver module to send the second indication information to the receiving end.

In a possible implementation, the transceiver module is further configured to send third indication information to the receiving end. The third indication information indicates an order in which the transmitting end sends the plurality of measurement reference signals.

In a possible implementation, the transceiver module is further configured to: send the plurality of measurement reference signals to the receiving end via the RIS; and receive the measurement result of the target beam from the receiving end. The measurement result of the target beam includes the information identifying the target beam.

In a possible implementation, the transceiver module is further configured to send fifth indication information to the receiving end, where the fifth indication information indicates a mode in which the receiving end performs beam measurement.

In a possible implementation, the processing module is further configured to determine the first beam direction based on fourth indication information. The fourth indication information indicates at least one of the relative position and the relative direction between the transmitting end and the RIS. Alternatively, the fourth indication information indicates at least one of the azimuth of the RIS, the panel orientation of the RIS, the height of the RIS, the panel pitch angle of the RIS, or the distance between the RIS and the transmitting end. Alternatively, the fourth indication information indicates the incident direction of the transmit beam of the transmitting end and the normal direction of the RIS.

For possible implementations of the communication apparatus in the sixth aspect, refer to the possible implementations of the third aspect.

For technical effects brought by the possible implementations of the sixth aspect, refer to descriptions of the technical effects of the third aspect or the possible implementations of the third aspect.

According to a seventh aspect, an embodiment of this application provides another communication apparatus. The communication apparatus includes one or more processors. The one or more processors are configured to process data and/or signaling, so that the method in any one of the first aspect to the third aspect is implemented.

Optionally, the communication apparatus further includes a memory. The memory stores a computer program or instructions. When the computer program or the instructions are executed by the processor, the communication apparatus is enabled to perform the method in any one of the first aspect to the third aspect. For example, the communication apparatus may be a chip, the processor is a processing unit in the chip, and the memory is a random access memory or a cache in the chip.

In this embodiment of this application, in a process of performing the method, a process of sending information (or a signal) in the method may be understood as a process of outputting information according to computer program or the instructions of the processor. When the information is output, the processor outputs the information to a transceiver, so that the transceiver transmits the information. After the information is output by the processor, other processing may be further performed on the information before the information arrives at the transceiver. Similarly, when the processor receives input information, the transceiver receives the information, and inputs the information into the processor. Further, after the transceiver receives the information, other processing may be performed on the information before the information is input into the processor.

Operations such as sending and/or receiving related to the processor may be generally understood as a computer program or instructions output based on the processor, unless otherwise specified, or if the operations do not conflict with an actual function or internal logic of the processor in related descriptions.

In an implementation process, the processor may be a processor specially configured to perform these methods, or may be a processor, for example, a general-purpose processor, that executes the computer program or the instructions in the memory to perform these methods. For example, the processor may be further configured to execute a program stored in the memory. When the program is executed, the communication apparatus is enabled to perform the method shown in the first aspect or any possible implementation of the first aspect.

In a possible implementation, the memory is located outside the communication apparatus. In a possible implementation, the memory is located inside the communication apparatus.

In a possible implementation, the processor and the memory may alternatively be integrated into one device, that is, the processor and the memory may alternatively be integrated together.

In a possible implementation, the communication apparatus further includes the transceiver. The transceiver is configured to receive a signal, send a signal, or the like.

According to an eighth aspect, this application provides another communication apparatus. The communication apparatus includes a processing circuit and an interface circuit. The interface circuit is configured to obtain data or output data. The processing circuit is configured to perform the method in any one of the first aspect to the third aspect. According to a ninth aspect, this application provides a computer-readable storage medium. The computer-readable storage medium stores a computer program, the computer program includes program instructions, and when the program instructions are executed, a computer is enabled to perform the method in any one of the first aspect to the third aspect.

According to a tenth aspect, this application provides a computer program product. The computer program product includes a computer program, and the computer program includes program instructions. When the program instructions are executed, a computer is enabled to perform the method in any one of the first aspect to the third aspect. According to an eleventh aspect, this application provides a chip, including a communication interface and a processor. The communication interface is configured to receive and send a signal of the chip. The processor is configured to execute computer program or instructions, so that a communication apparatus including the chip performs the method in any one of the first aspect to the third aspect.

According to a twelfth aspect, an embodiment of this application provides a communication system, including the communication apparatus according to any one of the fourth aspect or the possible implementations of the fourth aspect, and the communication apparatus according to any one of the fifth aspect or the possible implementations of the fifth aspect. Optionally, the communication system further includes the RIS according to any one of the fourth aspect or the possible implementations of the fourth aspect.

According to a thirteenth aspect, an embodiment of this application provides a communication system, including the communication apparatus according to any one of the fourth aspect or the possible implementations of the fourth aspect, and the communication apparatus according to any one of the sixth aspect or the possible implementations of the sixth aspect. Optionally, the communication system further includes the RIS according to any one of the fourth aspect or the possible implementations of the fourth aspect.

### BRIEF DESCRIPTION OF DRAWINGS

FIG. 1 is a diagram of three beam directions corresponding to three lobes in a 1-bit RIS antenna radiation pattern according to an embodiment of this application;
FIG. 2 is a diagram of comparison between a 1-bit RIS beam measurement instance and a multi-bit RIS beam measurement instance according to an embodiment of this application;
FIG. 3 is a diagram of an architecture of a communication system to which an embodiment of this application may be applied;
FIG. 4 is a flowchart of a communication method according to an embodiment of this application;
FIG. 5 is a flowchart of another communication method according to an embodiment of this application;
FIG. 6 is a diagram of a relative position between a base station (an example of a transmitting end) and a RIS according to an embodiment of this application;
FIG. 7 is a flowchart of another communication method according to an embodiment of this application;
FIG. 8 is a flowchart of another communication method according to an embodiment of this application;
FIG. 9 is a flowchart of another communication method according to an embodiment of this application;
FIG. 10 is a flowchart of another communication method according to an embodiment of this application;
FIG. 11 is a flowchart of another communication method according to an embodiment of this application;
FIG. 12 is a diagram of a structure of a communication apparatus 1200 according to an embodiment of this application;
FIG. 13 is a diagram of a structure of another apparatus 1300 according to an embodiment of this application;
FIG. 14 is a diagram of a structure of another apparatus 1400 according to an embodiment of this application; and
FIG. 15 is a simulation diagram of existing 1-bit RIS beam measurement and 1-bit RIS beam measurement provided in this application according to an embodiment of this application.

### DESCRIPTION OF EMBODIMENTS

In this specification, claims, and the accompanying drawings of this application, terms such as "first" and "second" are only intended to distinguish between different objects but do not describe a particular order. It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes. In addition, the terms "include", "have", and any other variants thereof are intended to cover a non-exclusive inclusion. For example, a process, a method, a system, a product, a device, or the like that includes a series of steps or units is not limited to the listed steps or units, but optionally further includes unlisted steps or units, or optionally further includes other inherent steps or units of the process, the method, the product, the device, or the like.

An "embodiment" mentioned in this specification means that a particular feature, structure, or characteristic described with reference to this embodiment may be included in at least one embodiment of this application. The phrase shown in various locations in this specification may not necessarily refer to a same embodiment, and is not an independent or optional embodiment exclusive from another embodiment. It may be explicitly and implicitly understood by persons skilled in the art that embodiments described in this specification may be combined with another embodiment. In this application, names of messages are merely used to distinguish between different messages, and should not be construed as a limitation. In other words, a name of any message in this application may be replaced with another name. This is not limited in this application.

Terms used in the following embodiments of this application are merely intended to describe specific embodiments, but are not intended to limit this application. The terms "one", "a", "an", "the", and "this" of singular forms used in this specification and the appended claims of this application are also intended to include plural forms, unless otherwise specified in the context clearly. It should also be understood that the term "and/or" used in this application means and includes any or all possible combinations of one or more listed items. For example, "A and/or B" may represent three cases: Only A exists, only B exists, and both A and B exist, where A and B may be singular or plural. The term "a plurality of" used in this application means two or more. In text descriptions of this application, the character "/" usually indicates an "or" relationship between associated objects.

It may be understood that in embodiments of this application, "B corresponding to A" indicates that there is a correspondence between A and B, and B may be determined based on A. However, it should be further understood that determining (or generating) B based on (or according to) A does not mean that B is determined (or generated) only based on (or according to) A, and B may alternatively be determined (or generated) based on (or according to) A and/or other information.

It should be understood that in this application, the indication includes a direct indication (also referred to as an explicit indication) and an implicit indication. Directly indicating information A means including the information A. Implicitly indicating the information A means indicating the information A by directly indicating information B and based on a correspondence between the information A and the information B. The correspondence between the information A and the information B may be predefined, prestored, pre-burned, or preconfigured.

It should be understood that, in this application, that information C is used to determine information D includes that the information D is determined only based on the information C, and also includes that the information D is determined based on the information C and other information. In addition, that the information C is used to determine the information D may further include an indirect determining case. For example, the information D is determined based on information E, and the information E is determined based on the information C.

In addition, in embodiments of this application, that "a network element A sends information A to a network element B" may be understood as that a destination end of the information A or an intermediate network element in a transmission path between the network element A and the destination end is the network element B, and may include directly or indirectly sending information to the network element B; and that "a network element B receives information A from a network element A" may be understood as that a source end of the information A or an intermediate network element in a transmission path between the network element B and the source end is the network element A, and may include directly or indirectly receiving information from the network element A. Information may undergo necessary processing, for example, a format change, between the source for sending the information and the destination. However, the destination may understand valid information from the source. A similar expression in this application may be understood similarly, and details are not described herein again.

To facilitate understanding of the solutions of this application, the following first describes terms and technical solutions in embodiments of this application.

Multiple-input multiple-output (MIMO, Multi-input Multi-output): In the MIMO technology, an array gain, a multiplexing gain, a diversity gain, and an interference cancellation gain in space can be obtained for a signal by using a resource in a space dimension without increasing a system bandwidth, so that a capacity and spectral efficiency of a communication system are exponentially improved. Therefore, since its emergence, MIMO has been used as one of the most typical and effective solutions for overcoming non-ideal characteristics such as channel fading and intersymbol interference caused by complexity and diversified communication environments, and has attracted considerable attention from researchers in wireless communications. For example, in a long term evolution (long term evolution, LTE) system, a transmitting end and a receiving end support transmission with up to eight layers by using a plurality of antennas.

Multi-user multiple-input multiple-output (multi-user multi-input multi-output, MU-MIMO) scheduling: Array antennas are widely used in communication systems that transmit signals based on beamforming technologies. Because an array antenna on a network device side (for example, a base station) usually has a plurality of antenna ports, the network device has a capability of communicating with a plurality of terminal devices at a same moment. To make full use of resources, the network device may allocate same time-frequency resources or address code resources to different terminal devices by using different antenna ports, that is, perform MU-MIMO scheduling. In a process of performing MU-MIMO scheduling, the network device may suppress sidelobe radiation of a beam by using a directional beam formed by an array antenna, thereby reducing interference among different terminal devices. Beam (beam): The beam may correspond to an instantaneous or statistical channel characteristic during signal transmission, for example, a delay spread (delay spread), a Doppler spread (Doppler spread), a Doppler shift (Doppler shift), an average delay (average delay), an average gain, a spatial receive parameter (spatial receive parameter), and a spatial transmit parameter (spatial transmit parameter). The spatial receive parameter or the spatial transmit parameter may include one or more of the following: an angle of arrival (angle of arrival, AOA), an average AOA, an AOA spread, an angle of departure (angle of departure, AOD), an average angle of departure AOD, an AOD spread, a receive antenna spatial correlation parameter, a transmit antenna spatial correlation parameter, a transmit beam, a receive beam, and a resource identifier. The beam may be referred to as a spatial domain filter (spatial domain filter), a spatial filter (spatial filter), a spatial domain parameter (spatial domain parameter), a spatial parameter (spatial parameter), a spatial domain setting (spatial domain setting), a spatial setting (spatial setting), quasi-colocation (quasi-colocation, QCL) information, a QCL assumption, a QCL indication, or the like. The beam may be indicated by a transmission configuration indicator (transmission configuration indicator, TCI) state (state) parameter, or may be indicated by a spatial relation (spatial relation) parameter. Therefore, in this application, the beam may be replaced with a transmission direction, a transmission resource, a spatial domain filter, a spatial filter, a spatial domain parameter, a spatial parameter, a spatial domain setting, a spatial setting, QCL information, a QCL assumption, a QCL indication, a TCI state (including an uplink TCI state and a downlink TCI state), a spatial relationship, or the like. Alternatively, the beam may be replaced with another term representing the beam. This is not limited in this application. In this application, a beam used to transmit a signal may be referred to as a transmit beam (transmission beam, Tx beam), a spatial domain transmission filter (spatial domain transmission filter), a spatial transmission filter (spatial transmission filter), a spatial domain transmission parameter (spatial domain transmission parameter), a spatial transmission parameter (spatial transmission parameter), a spatial domain transmission setting (spatial domain transmission setting), or a spatial transmission setting (spatial transmission setting). In this application, a beam used to receive a signal may be referred to as a receive beam (reception beam, Rx beam), a spatial domain reception filter (spatial domain reception filter), a spatial reception filter (spatial reception filter), a spatial domain reception parameter (spatial domain reception parameter), a spatial reception parameter (spatial reception parameter), a spatial domain reception setting (spatial domain reception setting), or a spatial reception setting (spatial reception setting). An uplink transmit beam may be indicated by either a spatial relation or a sounding reference signal (sounding reference signal, SRS) resource (indicating a transmit beam using the SRS). The uplink beam may alternatively be replaced with the SRS resource.

The transmit beam may be distribution of signal strength formed in different directions in space after a signal is transmitted through an antenna, and the receive beam may be distribution of signal strength, in different directions in space, of a radio signal received from an antenna. In addition, the beam may be a wide beam, a narrow beam, or a beam of another type. A technology for forming the beam may be a beamforming technology or another technology. The beamforming technology may be specifically a digital beamforming technology, an analog beamforming technology, a hybrid digital beamforming technology, a hybrid analog beamforming technology, or the like. The beam usually corresponds to a resource. For example, during beam measurement, a network device measures different beams by using different resources, a terminal device feeds back measured resource quality, so that the network device learns of quality of a corresponding beam. During data transmission, beam information may also be indicated by a resource corresponding to the beam information. For example, the network device indicates beam information of the terminal device by using a TCI field in downlink control information (downlink control information, DCI). Optionally, a plurality of beams that have same or similar communication features are considered as one beam. One beam may include one or more antenna ports for transmission of a data channel, a control channel, a sounding signal, and the like. The one or more antenna ports forming the beam may also be considered as one antenna port set.

The beam may be indicated/represented by using a reference signal. That is, a QCL relationship between reference signals reflects different or same beams. In addition, the beam may alternatively be represented by using a weight acting on an antenna or a codebook (codebook) acting on an antenna port in a multi-antenna system. That is, the beam may also correspond to a codebook.

Reconfigurable intelligent surface (reconfigurable intelligent surface, RIS): The RIS is an artificial two-dimensional material of a sub-wavelength size, usually composed of metals, dielectrics, and tunable elements, and can be equivalently characterized as an RLC circuit. The RLC circuit is a circuit structure formed by a resistor (R), an inductor (L), and a capacitor (C). By controlling a bias voltage of a varactor diode, a PIN switch, a diode, a micro-electro mechanical system (micro-electro mechanical system, MEMS) switch, a liquid crystal, graphene, and the like, the RIS produces electromagnetic behavior required by each electromagnetic unit. Specifically, the RIS is represented as an intelligent surface including a plurality of elements (elements), and each element is a low-cost passive reflective element. Through flexibly configuration of amplitudes and phases of each element, wireless channel fading can be controlled, and an expected directional beam can be formed. The RIS can be mounted on large surfaces (for example, indoor walls or ceilings, or outdoor buildings or signs) to reflect radio frequency (radio frequency, RF) energy around obstacles and create a virtual line-of-sight propagation path between a communication source and a communication target. Compared with a transmitting end and a receiving end in an existing wireless network, advantages of the RIS can be summarized as follows: (1) Enhanced spectral efficiency: The RIS provides a new degree of freedom that can be changed. By intelligently controlling the elements, the RIS can further improve communication quality of a radio link, enhance useful signal strength at the receiving end, reduce intensity of channel interference, and provide a breakthrough point for implementation of an overall intelligent network in the future. (2) Reduced energy consumption and device complexity: Because the RIS may only passively reflect a received signal, that is, the RIS end does not need to configure transmitting and receiving units, and does not need to encode and decode data, complexity of an actual hardware device of the RIS may be greatly reduced compared with that of an existing base station and terminal, thereby achieving an objective of reducing system energy consumption of the wireless network. (3) Easy deployment: Because the RIS may include only passive reflective electromagnetic elements, the RIS may be conveniently deployed on surfaces of various buildings, indoor walls, platforms, roadside billboards, high-speed road signs, vehicle windows, and other devices, and may be removed or redeployed at any time according to a network requirement. (4) Compatibility: The RIS may be regarded as a supplementary device to an existing network, and therefore does not affect existing protocols or require any modification to current devices, which offers compatibility. (5) Full-duplex: Compared with a relay (relay) device running in a half-duplex mode, the RIS only performs passive reflection and therefore may run in a full-duplex mode, thereby improving spectrum efficiency.

Application scenarios of the RIS include coverage enhancement and coverage hole mitigation. For example, deploying one or more RISs at an edge of a cell or in coverage holes caused by blockage or deep fading can achieve effect of coverage extension and coverage hole mitigation. Another potential application scenario of the RIS is rank enhancement. Based on the RIS, a channel may be actively changed, and more transmission paths with controllable gains may be provided. The RIS may be used between the network device and the terminal device to actively control quality of a wireless channel between the network device and the terminal device, for example, enhance a link gain, increase a quantity of eigen-subchannels, and so on. The RIS improves a rank used for communication, which has also become a valuable scenario. In the technical solutions of this application, the RIS is mainly used to enhance a rank used for communication, thereby improving a system performance gain.

Reference signal: In a demodulation process at a receiving end of a communication system, compared with incoherent demodulation, coherent demodulation has better performance and has an advantage of about 3 dB. Therefore, coherent demodulation is more widely used in a modern communication system. However, modulation on each carrier in an orthogonal frequency division multiplexing (orthogonal frequency division multiplexing, OFDM) system is to suppress the carrier. Reference signals are required during the coherent demodulation at the receiving end. The reference channel is also referred to as a pilot signal or a reference signal (reference signal, RS). In an OFDM symbol, the signals are distributed on different resource elements (resource elements, REs) in two-dimensional time-frequency space, and have amplitudes and phases that are known. Likewise, in a MIMO system, each transmit antenna (a virtual antenna or a physical antenna) has an independent data channel. Based on a predicted RS signal, a receiving end performs channel estimation for each transmit antenna and restores transmit data based on the channel estimation. The channel estimation is a process in which a received signal is reconstructed to compensate for channel fading and noise. In this process, time-domain and frequency-domain changes of a channel are determined by using RSs predicted by a transmitting end (also referred to as a transmitter) and a receiving end (also referred to as a receiver). For example, to implement channel quality measurement and data demodulation in a high-order multi-antenna system, a long term evolution enhancement (long term evolution advanced, LTE-A) system separately defines a plurality of pilot signals: a cell-specific reference signal (cell-specific reference signal, CRS), a demodulation reference signal (demodulation reference signal, DMRS), and a channel state information reference signal (channel state information-reference signal, CSI-RS). The DMRS is used for demodulation of a physical downlink shared channel (physical downlink shared channel, PDSCH) or a physical downlink shared channel (physical uplink shared channel, PUSCH). The CSI-RS is used to measure channel information and report information such as a channel quality indicator (channel quality indicator, CQI), a precoding matrix indicator (precoding matrix indicator, PMI), and a rank indicator (rank indicator, RI).

RIS channel estimation: Because a RIS is usually considered as a passive reflective element, and in a RIS-MIMO system, because the RIS usually has a large quantity of (thousands of) elements, direct estimation of a channel matrix of the RIS requires a quantity of pilots proportional to the quantity of elements of the RIS, leading to an overhead bottleneck. Because the RIS does not have a radio frequency (radio frequency, RF) chain for active sending and receiving, and cannot receive, send, and process a signal, a RIS-aided communication system cannot obtain channel state information of the RIS by using a conventional channel estimation method. In addition, with an increase in the quantity of reflective units, dramatic expansion of dimensions of the channel matrix also increases difficulty in obtaining CSI. A base station (base station, BS)-user equipment (user equipment, UE) channel (that is, a channel between a BS and UE) may be estimated by using a plurality of mature technologies, and therefore is not described herein again. In the RIS-aided communication system, only a BS-RIS-UE cascaded channel, that is, a BS-RIS channel and a RIS-UE channel, needs to be estimated. There have been many studies on RIS channel estimation in the industry. For example, an uplink cascaded channel and a downlink cascaded channel may be estimated based on an uplink or downlink transmit reference signal, to perform operations such as precoding, modulation order setting, and rank quantity setting.

RIS precoding/beamforming: Similar to a function of a precoding technology in a conventional MU-MIMO system, precoding can implement proper use of channel state information, that is, improve reception performance through preprocessing of a transmit signal. Specifically, information such as a phase and an amplitude of each electromagnetic unit of the RIS is regulated, so that a beam may be adjusted to be transmitted in a specific direction, thereby reducing transmit power of a required signal, improving spectral efficiency, expanding a coverage area, and weakening interference. In a conventional multi-antenna cellular network, beamforming design mainly includes precoding and equalization matrix design for a multi-antenna transceiver, to implement directional signal transmission. However, introduction of the RIS makes the beamforming design of the system more complex. Based on a programmable feature of the RIS, the RIS may be used as an external analog precoder, and a corresponding phase shift matrix is designed, that is, the RIS performs reflection control on a signal from a transmitter by using analog beamforming.

Main lobe (main lobe) beam, sidelobe (side) beam, and mirror beam: The main lobe beam (or a main lobe) is a beam that can be used by a transmitting end to send a signal to a receiving end. In other words, the main lobe beam is a beam that the transmitting end needs to know in a beam measurement process for sending information and/or a signal to the receiving end. A sidelobe beam (or a sidelobe) is another beam that can be used by the transmitting end to send a signal to the receiving end. In this application, compared with sending a signal to the receiving end using the sidelobe beam, sending a signal to the receiving end using the main lobe beam (a resource corresponding to the main lobe beam) by the transmitting end has a higher SNR of a signal received by the receiving end and has a larger throughput. Using the main lobe beam by the transmitting end for transmitting a signal to the receiving end is superior to using the sidelobe beam for transmitting a signal to the receiving end. In this application, the sidelobe may be replaced with a grating lobe or a minor lobe. The main lobe beam may be a beam that should be fed back by the receiving end to the transmitting end during beam measurement. A direction of a mirror beam (which may be named as a mirror beam direction, a first beam direction, or the like) is a beam direction determined based on a relative position and/or a relative direction between the transmitting end and the RIS in a scenario in which beam measurement is performed using a 1-bit RIS. In other words, the direction of the mirror beam is a beam direction determined by the relative position and/or the relative direction between the transmitting end and the RIS. The following uses the first beam direction to represent the direction of the mirror beam.

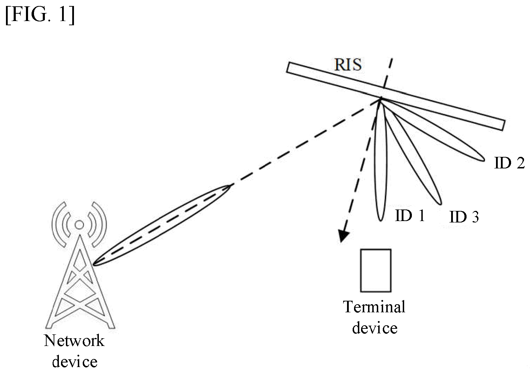

An included angle between the first beam direction and a normal direction of the RIS is equal to an included angle between an incident beam direction of a transmit beam of the transmitting end and the normal direction of the RIS. A normal line of the RIS is a straight line perpendicular to a plane where the RIS is located. The normal direction of the RIS is a relative direction of the normal line of the RIS in a system-defined coordinate system. It should be noted that the normal direction of the RIS is a relative concept, and is determined by a definition manner of the system-defined coordinate system. For example, if it is defined in the system that a BS panel plane (that is, a panel plane of a base station) is an X axis and a Y axis of a rectangular coordinate system, and a normal line of the BS panel (that is, a normal line of the panel plane of the base station) is a Z axis, the normal direction of the RIS is defined as a multi-dimensional vector (*θₕ*, *θᵥ*) formed by an included angle between a normal line of a RIS panel and an edge of the BS panel, and an included angle between the normal line of the RIS panel and the normal line. The incident beam direction of the transmit beam of the transmitting end is a relative direction of a transmit beam direction of the transmitting end in the system-defined coordinate system. It should be noted that the incident beam direction is also a relative concept, and is determined by a definition manner of the system-defined coordinate system. For example, if it is defined in the system that a BS panel plane is an X axis and a Y axis of a rectangular coordinate system, and a normal line of the BS panel is a Z axis, the incident beam direction is defined as a multi-dimensional vector (*αₕ*, *αᵥ*) formed by an included angle between the transmit beam of the transmitting end and an edge of the BS panel, and an included angle between the transmit beam of the transmitting end and the normal line. Alternatively, a difference between the included angle between the first beam direction and the normal direction of the RIS and the included angle between the incident beam direction of the transmit beam of the transmitting end and the normal direction of the RIS is less than or equal to a preset value. The preset value may be set based on an actual requirement. For example, a value range of the preset value is 0 to 5 degrees. Alternatively, the first beam direction and the incident direction of the transmit beam of the transmitting end are symmetric with respect to the normal direction of the RIS. The first beam direction may be determined based on the incident direction of the transmit beam of the transmitting end and the normal direction of the RIS. The incident direction of the transmit beam of the transmitting end and the normal direction of the RIS may be determined based on a relative position and/or a relative direction between the transmitting end and the RIS, and the first beam direction is determined based on the relative position and/or the relative direction between the transmitting end and the RIS. In a scenario in which beam measurement is performed using a 1-bit RIS, a phase rotation angle of a direction of the main lobe beam with respect to the first beam direction is the negative of a phase rotation angle of a direction of the sidelobe beam with respect to a direction of the mirror beam. In other words, the direction of the main lobe beam and the direction of the sidelobe beam are symmetrically located in the first beam direction. FIG. 1 is a diagram of three beam directions corresponding to three lobes in a 1-bit RIS antenna radiation pattern according to an embodiment of this application. As shown in FIG. 1, a beam indicated by an identity (identity, ID) 2 is a sidelobe. A beam indicated by an ID 3 is the mirror beam. A beam indicated by an ID 1 is the target beam. A direction indicated by an arrow perpendicular to a plane on which the RIS is located is the normal direction of the RIS. A center line of the transmit beam of the transmitting end represents the incident direction of the transmit beam of the transmitting end. The direction of the main lobe beam and the direction of the sidelobe beam are symmetrically located in the direction of the mirror beam, and the first beam direction and the incident direction of the transmit beam of the transmitting end are symmetrical with respect to the normal direction of the RIS. It should be noted that in this application, the main lobe is not a beam corresponding to a signal with maximum power among a plurality of signals received by the receiving end, and the direction of the main lobe and the direction of the sidelobe are determined based on the direction of the mirror beam. Further, determining of the main lobe and the sidelobe also depends on a relative position relationship of the receiving end with respect to the RIS. In other words, in this application, the receiving end may determine (or distinguish) the main lobe and the sidelobe based on a relative position relationship of the receiving end with respect to the RIS and the direction of the mirror beam.

Structure of the RIS: The RIS mainly includes two parts: a metamaterial surface and a control module. The metamaterial surface is formed by a large quantity of sub-wavelength elements, and is usually composed of artificial two-dimensional materials such as metals, dielectrics, and tunable elements. The control module has a programmable capability, enabling dynamic adjustment of physical properties, such as capacitive reactance, impedance, or inductive reactance, of an electromagnetic unit on the metamaterial surface via the control module. This allows changes in radiation characteristics of the RIS and achieve non-specular reflection, negative refraction, wave absorption, beamforming, polarization conversion, and the like, thereby implementing dynamic control of electromagnetic waves. There are a variety of tunable elements in the elements of the RIS, with diodes and micro-electronic mechanical systems (micro-electro mechanical systems, MEMSs) being the most commonly used. A PIN-diode-based RIS (that is, a tunable element within the element is a PIN diode) modulates a phase of an incident electromagnetic wave by controlling on/off of a PIN diode and altering a current direction. Different combinations of on/off states of the PIN diode result in distinct electromagnetic phase responses of the elements. Propagation of electromagnetic surface waves is controlled by modulating surface impedance of the RIS based on a bias voltage (or effective manipulation of electromagnetic waves is implemented by controlling reflection coefficients of the metasurface), thereby implementing direct modulation of the electromagnetic waves. A RIS unit in the 1-bit (bit) RIS requires only two switchable states (usually with a 180° phase difference), to implement beamforming of an electromagnetic wave. In principle, a multi-bit RIS may be implemented based on superposition of a plurality of PIN diodes or based on multi-level voltage modulation of surface impedance of a resonant circuit within the RIS. A RIS unit in the multi-bit RIS implements beamforming of an electromagnetic wave through a plurality of switchable states.

In existing academic and industrial circles, there has been study on solutions for implementing the multi-bit RIS based on superposition of a plurality of PIN diodes, as well as solutions for implementing the multi-bit RIS based on varactor diodes with multi-level bias voltage. In addition, more research is still ongoing into the 1-bit RIS. In existing academic and industrial circles, the multi-bit RIS faces challenges of complexity and ultra-high latency. Table 1 shows corresponding characteristics and quantization precisions of several mainstream RISs currently in the industry.

**Table 1**

| Solution | Solution 1 | Solution 2 | Solution 3 |
|---|---|---|---|
| RIS unit | PIN diode | MEMS | Liquid crystal |

| Response time | <50 ns | 1 µs to 10 µs | 1 ms to 5 ms |
|---|---|---|---|
| Quantization Bit | 1 bit to 2 bits | 3 bits to 4 bits | Continuous precision |

As shown in Table 1, a response time of Solution 1 (including a solution for implementing a 2-bit RIS based on superposition of a plurality of PIN diodes) is less than 50 ns, a response time of Solution 2 (that is, a solution for implementing a multi-bit RIS based on varactor diodes with multi-level bias voltage) is 1 µs to 10 µs, and a response time of a solution is 1 ms to 5 ms. The superposition of the plurality of PIN diodes increases design complexity of a control circuit exponentially. Due to long voltage switching duration of a single varactor diode unit, combined with challenges of parallel or serial biasing across an ultra-large array surface, a response time of Solution 2 reaches more than ten microseconds or tens of microseconds. It can be learned that the solution based on varactor diodes with multi-level bias voltage has ultra-high latency, affecting transmission efficiency.

Considering research challenges of the multi-bit RIS, the 1-bit RIS remains to be a prevalent implementation in recent years. During actual application, an existing solution using the 1-bit RIS for beam measurement and data transmission has a throughput reduction of approximately 5% compared with an existing solution using the multi-bit RIS for beam measurement and data transmission.

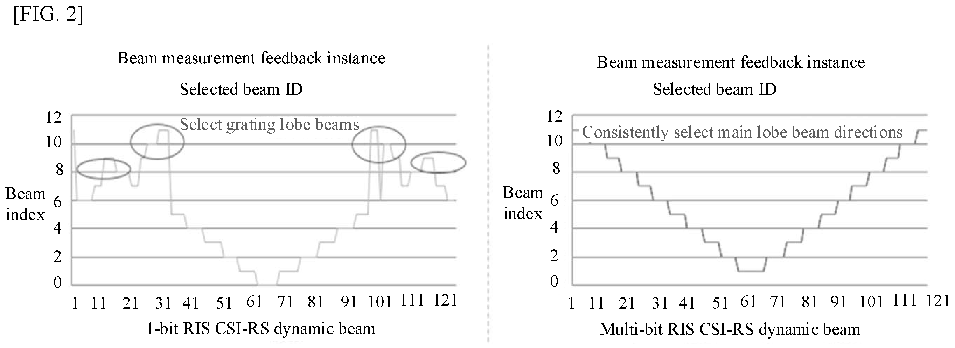

Through research, the applicant finds that a reason for the throughput reduction caused by using the 1-bit RIS for beam measurement and data transmission, compared with using the multi-bit RIS for beam measurement and data transmission, is due to a severe grating lobe (or sidelobe) problem inherent in the 1-bit RIS itself. The grating lobe problem refers to a problem that in an existing solution using the 1-bit RIS for beam measurement, a beam with highest received power reported by the receiving end (for example, UE) is not a relatively optimal beam (for example, an optimal beam). The applicant finds that in the existing solution using the 1-bit RIS for beam measurement, power of a main lobe beam and a sidelobe beam corresponding to a measurement reference signal is very close, and the grating lobe problem is caused by the inability of the receiving end to correctly distinguish between the main lobe beam and the sidelobe beam corresponding to the measurement reference signal. The grating lobe problem is as follows: The power of the sidelobe beam is close to that of the main lobe beam. The grating lobe problem causes the transmitting end (for example, a base station) to select a beam direction that is not an optimal one, leading to reduced throughput performance. FIG. 2 is a diagram of comparison between a 1-bit RIS beam measurement instance and a multi-bit RIS beam measurement instance according to an embodiment of this application. As shown in FIG. 2, when the transmitting end and the receiving end perform beam measurement using the 1-bit RIS, the transmitting end repeatedly selects sidelobe beams (that is, grating lobe beams) as transmit beams. When the transmitting end and the receiving end perform beam measurement using the multi-bit RIS, the transmitting end consistently selects main lobe beams as transmit beams. To resolve the grating lobe problem existing in the existing solution using the 1-bit RIS for beam measurement, this application provides a technical solution in which it can be ensured that the transmitting end selects a relatively optimal beam.

A main idea of the technical solution provided in this application is as follows: In a process of performing beam measurement and beam information feedback using the 1-bit RIS, the receiving end determines the target beam (for example, the main lobe beam) based on the first beam direction (the direction of the mirror beam) and measurement results of a plurality of measurement reference signals, and performs feedback, so that the transmitting end selects a relatively optimal beam for downlink or uplink transmission, thereby improving transmission performance. The receiving end determines the target beam and feeds back the target beam, so that a problem that the sidelobe beam is mistakenly fed back instead of the main lobe beam can be eliminated (that is, the grating lobe problem is resolved). The following first describes a communication system to which the technical solutions provided in this application are applicable.

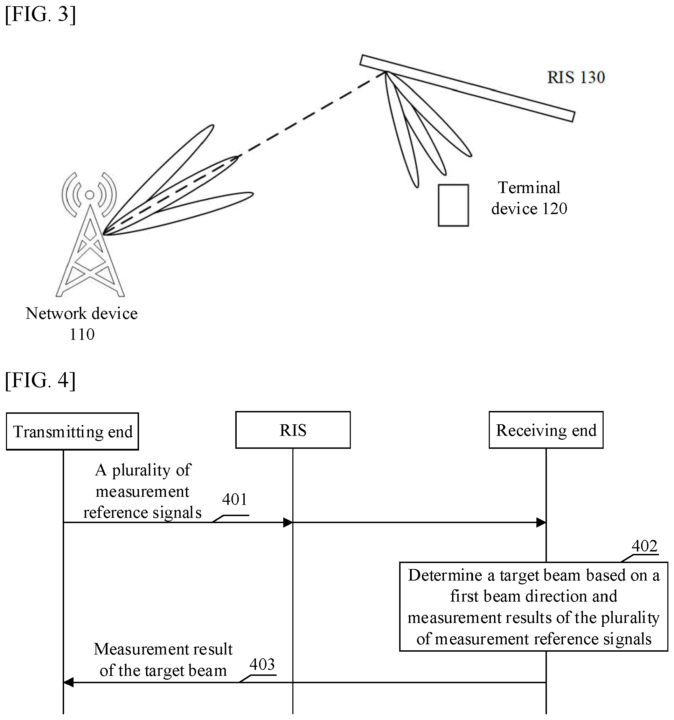

FIG. 3 is a diagram of an architecture of a communication system to which an embodiment of this application may be applied. As shown in FIG. 3, the communication system includes a network device 110, a terminal device 120, and a RIS 130. A communication system to which embodiments of this application may be applied includes one or more terminal devices and a plurality of RISs. The terminal device 120 is used as an example of a terminal device in the communication system, and the RIS 130 is used as example of a RIS in the communication system. FIG. 3 is merely a diagram. A quantity of network devices, a quantity of terminal devices, and a quantity of RISs included in the communication system are not limited in embodiments of this application. The terminal device 120 may access the network device 110, and communicate with the network device 110. The terminal device may be connected to the network device 110 in a wireless manner, and the network device 110 may be connected to the core network in a wireless manner or a wired manner. A core network device and the network device 110 may be different physical devices that are independent of each other, or functions of the core network device and logical functions of the network device 110 may be integrated into a same physical device, or some functions of the core network device and some functions of the network device 110 may be integrated into one physical device. Terminal devices may be connected to each other in a wired or wireless manner, and network devices may be connected to each other in a wired or wireless manner. FIG. 3 is merely a diagram. The communication system may further include another network device, for example, may further include a wireless relay device and a wireless backhaul device. This is not shown in FIG. 3. FIG. 3 is merely an example of a communication system to which an embodiment of this application may be applied. Embodiments of this application may be further applied to another communication system including a network device, a terminal device, and a RIS. In other words, embodiments of this application may be applied to any communication system in which a transmitting end sends a measurement reference signal to a receiving end via a RIS to perform beam scanning. Embodiments of this application may be applied to a scenario in which RIS-based communication enhancement is supported, for example, a scenario in which coverage holes of an existing network is reduced based on the RIS, or a scenario in which communication quality of specific areas is enhanced based on the RIS.

In embodiments of this application, a terminal device (terminal equipment) may also be referred to as user equipment (user equipment, UE), an access terminal, a subscriber unit (subscriber unit), a subscriber station, a mobile console, a mobile station (mobile station, MS), a remote station, a remote terminal, a mobile device, a user terminal, a terminal (terminal), a wireless communication device, a user agent, or a user apparatus.

The terminal device may be a device that provides a wireless communication function, for example, a handheld device or a vehicle-mounted device that has a wireless connection function. Currently, some examples of the terminal device are a mobile phone (mobile phone), a cellular phone (cellular phone), a smartphone (smartphone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device or another processing device connected to a wireless modem, a wearable device, a terminal device in a 5G network, a terminal device in a future evolved public land mobile network (public land mobile network, PLMN), and the like. This is not limited in embodiments of this application.

As an example instead of a limitation, in embodiments of this application, the terminal device may alternatively be a mobile terminal (mobile termination, MT) in an integrated access and backhaul (integrated access and backhaul, IAB) node.

As an example instead of a limitation, in embodiments of this application, the terminal device may alternatively be a wearable device. The wearable device may also be referred to as a wearable intelligent device, and is a general term of wearable devices, such as glasses, gloves, watches, clothes, and shoes, that are developed and intelligently designed for daily wear by using a wearable technology. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that focus on only one type of application function and need to collaboratively work with other devices such as smartphones, for example, various smart bands or smart jewelry for monitoring physical signs.

In this embodiment of this application, an apparatus configured to implement a function of the terminal device may be a terminal device, or may be an apparatus that can support the terminal device in implementing the function, for example, a chip system. The apparatus may be installed in the terminal device or used together with the terminal device. In this embodiment of this application, the chip system may include a chip, or may include a chip and another discrete component. In embodiments of this application, an example in which the apparatus configured to implement the function of the terminal device is a terminal device is merely used for description, and constitutes no limitation on the solutions in embodiments of this application.

The network device in embodiments of this application may be a device for communicating with the terminal device. The network device may also be referred to as an access network device or a radio access network device. For example, the network device may be a base station. In embodiments of this application, the network device may be a radio access network (RAN) node (or device) that connects the terminal device to a wireless network. The base station may cover or be replaced with the following names in a broad sense, for example, a RAN node, a NodeB (NodeB), an evolved NodeB (evolved NodeB, eNB), a next generation NodeB (next generation NodeB, gNB), a base station controller (base station controller, BSC), a base transceiver station (base transceiver station, BTS), a home base station (for example, a home evolved NodeB or a home NodeB, HNB), a baseband unit (baseband unit, BBU), a wireless relay node, a wireless backhaul node, a relay station, a transmitting and receiving point (transmitting and receiving point, TRP), an IAB node, a transmitting point (transmitting point, TP), a master base station, a secondary base station, a multi-standard radio (motor slide retainer, MSR) node, a network controller, an access node, a wireless node, an access point (access point, AP), a transmission node, a transceiver node, a remote radio unit (remote radio unit, RRU), an active antenna unit (active antenna unit, AAU), a remote radio head (remote radio head, RRH), a central unit (central unit, CU), a distributed unit (distributed unit, DU), a radio unit (radio unit, RU), a positioning node, and one or a group of antenna panels (including a plurality of antenna panels) of a base station in a 5G system.

The IAB node integrates a mobile termination (mobile termination, MT) and a distributed unit (distributed unit, DU). The IAB node may include three parts: an MT, a DU, and a central unit (central unit, CU). The central unit may be referred to as a center unit. The IAB node may include one CU and one or more DUs. When the IAB node includes a CU, the IAB node is an IAB donor (IAB donor) node, and the CU in the IAB donor node accesses a core network through a next generation application protocol (next generation application protocol, NG) interface. When facing a parent node of the IAB node, the IAB node may be considered as a terminal. In this case, the IAB node plays a role of an MT. When facing a child node (the child node may be a terminal or an MT of another IAB node) of the IAB node, the IAB node may be considered as a network device. The IAB node may establish a backhaul connection to at least one parent node of the IAB node by using the MT part. The DU part of the IAB node may provide an access service for a terminal or an MT part of another IAB node.

The base station may be a macro base station, a micro base station, a relay node, a donor node, or the like, or a combination thereof. The base station may alternatively be a communication module, a modem, or a chip arranged in the foregoing device or apparatus. The base station may alternatively be a mobile switching center, a device that functions as a base station in device-to-device (device-to-device, D2D), vehicle-to-everything (vehicle-to-everything, V2X), or machine-to-machine (machine-to-machine, M2M) communication, a network side device in a 6G network, a device that functions as a base station in a future communication system, or the like. The base station may support networks of a same access technology or different access technologies. Optionally, the RAN node may alternatively be a server, a wearable device, a vehicle, a vehicle-mounted device, or the like. For example, an access network device in a V2X technology may be a roadside unit (roadside unit, RSU). A specific technology and a specific device form that are used by the network device are not limited in embodiments of this application.

The base station may be fixed or mobile. For example, a helicopter or an uncrewed aerial vehicle may be configured as a mobile base station, and one or more cells may move based on a position of the mobile base station. In other examples, a helicopter or an uncrewed aerial vehicle may be configured as a device for communicating with another base station.

In some deployments, the network device mentioned in embodiments of this application may be a CU, or a DU, or a device including a CU and a DU, or a device including a control plane CU node (a central unit-control plane (central unit-control plane, CU-CP)), a user plane CU node (a central unit-user plane (central unit-user plane, CU-UP)), and a DU node. For example, the network device may include a gNB-CU-CP, a gNB-CU-UP, and a gNB-DU.

In some deployments, a plurality of RAN nodes cooperate to assist the terminal in implementing radio access, and different RAN nodes respectively implement some functions of the base station. For example, the RAN node may be a CU, a DU, a CU-CP, a CU-UP, or an RU. The CU and the DU may be separately disposed, or may be included in a same network element, for example, a BBU. The RU may be included in a radio frequency device, for example, included in an RRU, an AAU, or an RRH.

In different systems, the CU (or the CU-CP and the CU-UP), the DU, or the RU may also have different names, but persons skilled in the art may understand meanings thereof. For example, in an open radio access network (open radio access network, ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented by using a software module, a hardware module, or a combination of a software module and a hardware module.

In embodiments of this application, an apparatus for implementing a function of the network device may be a network device, or may be an apparatus that can support a network device in implementing the function, for example, a chip system, a hardware circuit, a software module, or a combination of a hardware circuit and a software module. The apparatus may be installed in the network device or used together with the network device. In embodiments of this application, an example in which the apparatus for implementing the function of the network device is a network device is merely used for description, and constitutes no limitation on the solutions in embodiments of this application. The network device and/or the terminal device may be deployed on land, including being deployed indoors or outdoors, or in a handheld manner or a vehicle-mounted manner; or may be deployed on water; or may be deployed on an airplane, a balloon, and a satellite in the air. A scenario in which the network device and the terminal device are located is not limited in embodiments of this application. In addition, the terminal device and the network device may be hardware devices, may be software functions running on dedicated hardware or software functions running on general-purpose hardware, for example, virtualized functions instantiated on a platform (for example, a cloud platform), or may be entities including a dedicated or general-purpose hardware device and a software function. Specific forms of the terminal device and the network device are not limited in this application.

In a possible implementation, the RIS may only need to passively reflect a received signal. In other words, no transmit and receiving units are required at a RIS end, and data does not need to be encoded or decoded. In other words, the RIS may include only a passive reflective electromagnetic element. In a possible implementation, the RIS may have a capability of sending a signal or information, or may have a capability of receiving a signal or information. For example, the RIS has a capability of sending its topological configuration information based on a signal from a base station or a terminal device. In other words, the RIS cannot passively reflect a received signal, and may actively send a signal or information. In this application, a structure of the RIS is not limited. The RIS may be replaced with another relay device that can reflect and/or transmit a signal, or may be replaced with another device that can perform beamforming on a signal.

It should be noted that a network architecture described in embodiments of this application is intended to describe the technical solutions in embodiments of this application more clearly, and does not constitute a limitation on the technical solutions provided in embodiments of this application. Persons of ordinary skill in the art may learn that the technical solutions provided in embodiments of this application are also applicable to a similar technical problem as a network architecture evolves and a new service scenario emerges. In the following embodiments, the technical solutions provided in embodiments of this application are described by using an example in which the apparatus configured to implement the function of the network device is a network device, and the network device is a base station.

It may be understood that a specific structure of an execution body of the method provided in embodiments of this application is not specifically limited in this application, provided that communication can be performed according to the method provided in embodiments of this application by running a program that records code of the method provided in embodiments of this application. The method provided in embodiments of this application may be applied to communication between a transmitting end and a receiving end. The following uses interaction between the transmitting end and the receiving end as an example for description.

FIG. 4 is a flowchart of a communication method according to an embodiment of this application. As shown in FIG. 4, the method includes the following steps.

401: A transmitting end sends a plurality of measurement reference signals to a receiving end via a RIS.

Correspondingly, the receiving end receives the plurality of measurement reference signals sent by the transmitting end via the RIS. That transmitting end sends the plurality of measurement reference signals to the receiving end via the RIS may be: The transmitting end sends the plurality of measurement reference signals to the RIS, where the plurality of measurement reference signals are sent and/or transmitted to the receiving end by the RIS. In a possible implementation, the transmitting end is a base station, the receiving end is UE, and the measurement reference signal is a CSI-RS. In this implementation, the measurement reference signal may alternatively be another downlink reference signal, for example, a CRS or a DMRS. In a possible implementation, the transmitting end is UE, the receiving end is a base station, and the measurement reference signal is an SRS. In this implementation, the measurement reference signal may alternatively be another uplink reference signal, for example, a DMRS. In this application, control authority of the RIS may reside with the base station, or may reside with the UE. The following uses an example in which the control authority of the RIS resides with the base station for description.

In a possible implementation, the transmitting end successively sends a plurality of measurement reference signals to the receiving end via the RIS using different transmit beams. Each measurement reference signal corresponds to one beam, different measurement reference signals correspond to different beams, and directions of the different beams are different. For example, transmit power of different measurement reference signals sent by the transmitting end is the same, a weight applied to an antenna of the transmitting end or a codebook applied to an antenna port of the transmitting end represents a beam, and different measurement reference signals correspond to different weights the antenna of the transmitting end or correspond to different codebooks of the antenna port of the transmitting end. An example of step 401 is as follows: In a beam measurement process, the transmitting end successively sends a plurality of measurement reference signals to the receiving end via the RIS using different transmit beams in a specific order. An order of sending the plurality of measurement reference signals by the transmitting end to the receiving end is an order of codewords in a scanning codebook used by the transmitting end. One codeword in the scanning codebook corresponds to one of the plurality of measurement reference signals, each codeword corresponds to one beam, and each measurement reference signal corresponds to one beam. The scanning codebook used by the transmitting end is the same as a scanning codebook used by the receiving end. In a possible implementation, the transmitting end and the receiving end may pre-agree on or pre-define a beam corresponding to each codeword in the scanning codebook. Another example of step 401 is as follows: In a beam measurement process, the transmitting end successively sends a plurality of measurement reference signals to the receiving end via the RIS using different transmit beams in a beam order that is pre-agreed on with the receiving end. Each beam corresponds to one measurement reference signal, and each measurement reference signal corresponds to one codeword in a scanning codebook. For example, the beam order that is pre-agreed on between the transmitting end and the receiving end is a beam #1-a beam #2-a beam #3...-a beam #K. That the transmitting end successively sends the plurality of measurement reference signals to the receiving end via the RIS using different transmit beams in the beam order that is pre-agreed on with the receiving end is as follows: The transmitting end first sends a measurement reference signal #1 using the beam #1, then sends a measurement reference signal #2 using the beam #2, then sends a measurement reference signal #3 using the beam #3, and so on. Finally, the transmitting end sends a measurement reference signal #K using the beam #K, where K is an integer greater than 1. Each measurement reference signal corresponds to a codeword in the scanning codebook used by the transmitting end.

402: The receiving end determines a target beam based on a first beam direction and measurement results of the plurality of measurement reference signals.

The first beam direction may be determined based on a relative position and/or a relative direction between the transmitting end and the RIS. The first beam direction may be a beam direction determined based on the relative position and/or the relative direction between the transmitting end and the RIS in a scenario in which beam measurement is performed using a 1-bit RIS, that is, the direction of the mirror beam. For example, the target beam may be a relatively optimal beam (that is, a main lobe beam) that can be used by the transmitting end to send a signal to the receiving end. Alternatively, the target beam may be a beam whose RSRP or SNR of a signal received by the receiving end exceeds a preset threshold when the transmitting end sends the signal to the receiving end under given transmit power. The preset threshold may be set based on an actual requirement, and is not limited herein. An example of step 402 is as follows: Information about the target beam (that is, the main lobe beam) and information about a sidelobe beam are determined based on the first beam direction and the measurement results of the plurality of measurement reference signals, that is, the target beam is distinguished from the sidelobe beam.

In a possible implementation, before performing step 402, the receiving end receives second indication information from the transmitting end or the RIS. The second indication information indicates the first beam direction. In a possible implementation, the receiving end sends a second trigger request to the transmitting end or the RIS based on reception performance or a mobility status of the receiving end. Alternatively, when the receiving end determines that beam scanning is to be performed, the receiving end sends the second trigger request to the transmitting end or the RIS. The second trigger request is for triggering the transmitting end or the RIS to send the second indication information. When the reception performance or the mobility status of the receiving end undergoes a significant change (for example, an SNR of a received signal of the receiving end is lower than a specific threshold or a moving speed of the receiving end exceeds a specific threshold), such a change is usually caused by a change in at least one of the relative position and the relative direction between the transmitting end and the RIS. The receiving end sends the second trigger request to the transmitting end or the RIS based on the reception performance or the mobility status of the receiving end, and may obtain at least one of a current relative position and a current relative direction between the transmitting end and the RIS in a timely manner. When determining that beam scanning needs to be performed, the receiving end sends the second trigger request to the transmitting end or the RIS, so that information for determining the first beam direction can be obtained in a timely manner. In this implementation, the first beam direction may be obtained by receiving the second indication information from the transmitting end or the RIS.

A possible implementation of step 402 is as follows: The target beam is determined based on the measurement results of the plurality of measurement reference signals, the first beam direction, and an order in which the transmitting end sends the plurality of measurement reference signals. In this application, one measurement reference signal corresponds to one measurement beam (transmit beam). An order in which the transmitting end sends the plurality of measurement reference signals may be an order in which the transmitting end successively sends the plurality of measurement reference signals using the plurality of measurement beams. Each measurement beam corresponds to one resource, one weight applied to an antenna of the transmitting end, or one codeword applied to an antenna port of the transmitting end. The order in which the transmitting end sends the plurality of measurement reference signals may be understood as an order in which the transmitting end sends the measurement beams. For example, the transmitting end sends the measurement reference signals by successively using the beam #1, the beam #2, the beam #3, ..., and the beam K, where K is an integer greater than 0. An order in which the transmitting end sends the plurality of measurement reference signals may relate to a beam order in a horizontal dimension and a beam order in a vertical dimension. An example of determining the target beam based on the measurement results of the plurality of measurement reference signals, the first beam direction, and the order in which the transmitting end sends the plurality of measurement reference signals is as follows: The receiving end successively receives the measurement reference signals sent by the transmitting end using the beam #1, the beam #2, the beam #3, ..., and the beam K, and separately performs beam measurement, for example, RSRP calculation, to obtain RSRP #1, RSRP #2, RSRP #3, ..., and RSRP #K. Based on the first beam direction, for example, by denoting β as an angle corresponding to the first beam direction in a system-defined coordinate system, the receiving end calculates an angular region to which the target beam belongs, and the angular region may be defined as either of two regions: > β and < β. Based on an order of measurement reference signals and a calculation result of RSRP of each measurement reference signal, the receiving end identifies at least two beams corresponding to largest RSRP or relatively large RSRP within a specific threshold range. Further, based on the angular region to which the target beam belongs, the target beam is finally determined, that is, a beam with largest RSRP within the angular region to which the target beam belongs.

In a possible implementation, the receiving end first determines s beams that are located within the angular region and that are in a plurality of beams associated with the plurality of measurement reference signals, where s is an integer greater than 0; and determines any beam whose first performance metric is greater than or equal to a target threshold in the s beams as the target beam. The first performance metric is RSRP, an SNR, an SINR, or the like. A sending order of the measurement reference signals associated with the target beam identifies the target beam. In a possible implementation, the receiving end first determines s beams that are located within the angular region and that are in a plurality of beams associated with the plurality of measurement reference signals; and determines a beam with a largest first performance metric in the s beams as the target beam. The first performance metric is RSRP, an SNR, or an SINR. A sending order of the measurement reference signals associated with the target beam identifies the target beam. For example, the receiving end determines a beam with highest RSRP in the s beams as the target beam. The measurement results of the plurality of measurement reference signals may include first performance metrics of the beams associated with the plurality of measurement reference signals. The receiving end may obtain, based on the measurement results of the plurality of measurement reference signals, the first performance metrics of the beams associated with the plurality of measurement reference signals. It should be noted that the RSRP is merely an example of a beam measurement result, and beam quality may be also measured by using another indicator, for example, an SNR or a signal-to-interference-plus-noise ratio (signal to interference plus noise ratio, SINR). Based on the first beam direction, for example, an example in which, by denoting β as the angle corresponding to the first beam direction in the system-defined coordinate system, the receiving end calculates the angular region to which the target beam belongs is as follows: The receiving end may determine, based on historical beam information fed back by the receiving end, that the angular region is either of two regions: > β and < β. The angular region depends on a relative position of the receiving end with respect to the RIS. Considering that, in practical systems, a beam measurement period is far less than an actual movement time over a unit distance, the angular region in this example may be determined based on historical information. Alternatively, the receiving end may determine the angular region by additionally considering variation patterns of RSRP, SNR, or decoding characteristics based on the historical information. For example, when a sudden change occurs in the RSRP, the SNR, or the decoding characteristics, the angular region determined based on the historical information may switch accordingly.

A possible implementation of step 402 is as follows: The target beam is determined based on the measurement results of the plurality of measurement reference signals, the first beam direction, the order in which the transmitting end sends the plurality of measurement reference signals, and a relative position relationship between the receiving end and the RIS. An example of determining the target beam based on the measurement results of the plurality of measurement reference signals, the first beam direction, the order in which the transmitting end sends the plurality of measurement reference signals, and the relative position relationship between the receiving end and the RIS is as follows: The receiving end successively receives the measurement reference signals sent by the transmitting end using the beam #1, the beam #2, the beam #3, ..., and the beam K, and separately performs beam measurement, for example, RSRP calculation, to obtain RSRP #1, RSRP #2, RSRP #3, ..., and RSRP #K. Based on the first beam direction and the relative position relationship between the receiving end and the RIS, for example, by denoting β as an angle corresponding to the first beam direction in a system-defined coordinate system, the receiving end calculates an angular region to which the target beam belongs, and the angular region may be defined as either of two regions: > β and < β. Based on an order of measurement reference signals and a calculation result of RSRP of each measurement reference signal, the receiving end identifies at least two beams corresponding to largest RSRP or relatively large RSRP within a specific threshold range. Further, based on the angular region to which the target beam belongs, the target beam is finally determined, that is, a beam with largest RSRP within the angular region to which the target beam belongs. Based on the first beam direction and the relative position relationship between the receiving end and the RIS, for example, an example in which, by denoting β as the angle corresponding to the first beam direction in the system-defined coordinate system, the receiving end calculates the angular region to which the target beam belongs is as follows: First, the receiving end may determine, based on historical beam information fed back by the receiving end, that the angular region is either of two regions: > β and < β. The angular region depends on a relative position of the receiving end with respect to the RIS. Considering that, in practical systems, a beam measurement period is far less than an actual movement time over a unit distance, the angular region in this example may be determined based on historical information. Alternatively, the receiving end may determine the angular region by additionally considering variation patterns of RSRP, SNR, or decoding characteristics based on the historical information. For example, when a sudden change occurs in the RSRP, the SNR, or the decoding characteristics, the angular region determined based on the historical information may switch accordingly. Second, if the receiving end may obtain its specific position information in another manner, the receiving end may determine the angular region based on its relative position information with respect to the RIS in a relative coordinate system and an angle corresponding to the first beam direction in the system-defined coordinate system, that is, compare an angle of a relative position vector with an angle of a first beam vector. For example, when the angle of the relative position vector is greater than the angle of the first beam vector, the angular region is > β; or otherwise, the opposite applies.

In a possible implementation, the transmitting end and the receiving end interact to exchange the order in which the transmitting end sends the plurality of measurement reference signals. An example in which the transmitting end and the receiving end interact to exchange the order in which the transmitting end sends the plurality of measurement reference signals is as follows: The transmitting end sends a first message to the receiving end, where the first message indicates the order in which the transmitting end sends the plurality of measurement reference signals. For example, the first message indicates that the plurality of measurement reference signals are successively sent in an order of codewords in a scanning codebook. After receiving the first message, the receiving end sends a second message to the transmitting end, where the second message indicates that the receiving end successfully receives the first message. Another example in which the transmitting end and the receiving end interact to exchange the order in which the transmitting end sends the plurality of measurement reference signals is as follows: The receiving end sends a third message to the transmitting end, where the third message is used to request the transmitting end to successively send the plurality of measurement reference signals in an order of codewords in a scanning codebook. After receiving the third message, the transmitting end sends a fourth message to the receiving end, where the fourth message indicates that the transmitting end agrees to successively send the plurality of measurement reference signals in the order of codewords in the scanning codebook. In a possible implementation, the transmitting end and the receiving end pre-agree on the order in which the transmitting end sends the plurality of measurement reference signals, for example, agree that the transmitting end successively sends the plurality of measurement reference signals in the order of codewords in the scanning codebook. The transmitting end and the receiving end may alternatively, in another manner, interact to exchange or agree on the order in which the transmitting end successively sends the plurality of measurement reference signals using different beams. This is not limited in this application.

403. The receiving end sends a measurement result of the target beam to the transmitting end.

Correspondingly, the transmitting end receives the measurement result of the target beam from the receiving end. In a possible implementation, the measurement result of the target beam includes information identifying the target beam, that is, identification information of the target beam. The measurement result of the target beam further includes information such as RSRP and an SNR of a measurement reference signal corresponding to the target beam.

The information identifying the target beam may be an index of the target beam, an angle vector, an index of a codeword corresponding to the target beam, or the like.

Step 401 to step 403 may be a beam measurement process. After completing beam measurement, the transmitting end and the receiving end may estimate an uplink cascaded channel and a downlink cascaded channel based on an uplink or downlink transmit reference signal, to perform operations such as precoding, modulation order setting, and rank quantity setting. In a possible implementation, after the transmitting end and the receiving end complete beam measurement, the base station or the UE may adjust information such as a phase and an amplitude of each electromagnetic unit of the RIS, to adjust a beam to be transmitted in a specific direction, that is, implement beamforming. It is a common technical means in this field to implement beamforming by adjusting information such as the phase and the amplitude of each electromagnetic unit of the RIS, and details are not described herein again. In this embodiment of this application, the target beam is determined based on the first beam direction and the measurement results of the plurality of measurement reference signals; and the measurement result of the target beam is sent to the transmitting end, so that the transmitting end selects the target beam to send data to the receiving end. In the beam measurement process, the measurement result of the target beam is sent to the transmitting end, so that impact on transmission performance caused by false feedback of a sidelobe beam can be avoided, thereby improving beam measurement and transmission performance.

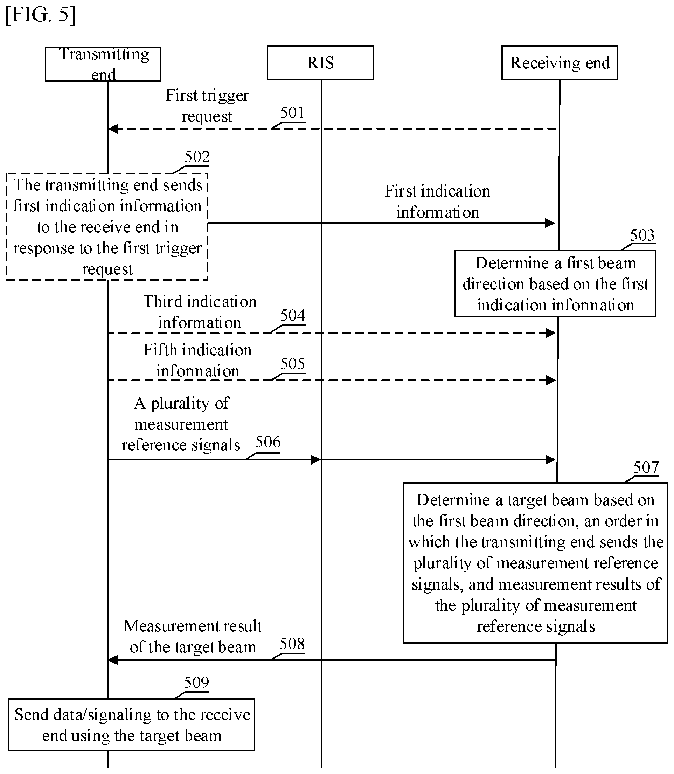

FIG. 5 is a flowchart of another communication method according to an embodiment of this application. A method procedure in FIG. 5 is a possible implementation of the method described in FIG. 4. In the method procedure in FIG. 5, control authority of a RIS may reside with a transmitting end. As shown in FIG. 5, the method includes the following steps.

501: A receiving end sends a first trigger request to the transmitting end.

Correspondingly, the transmitting end receives the first trigger request from the receiving end. The first trigger request is used to request the transmitting end to send information used by the receiving end to determine a first beam direction. In a possible implementation, the first trigger request is used to request the transmitting end to send information indicating at least one of a relative position and a relative direction between the transmitting end and the RIS. In a possible implementation, the first trigger request is used to request the transmitting end to send an incident direction of a transmit beam of the transmitting end and a normal direction of the RIS. In a possible implementation, the first trigger request is used to request the transmitting end to send information indicating at least one of an azimuth of the RIS, a panel orientation of the RIS, a height of the RIS, a panel pitch angle of the RIS, or a distance between the RIS and the transmitting end. Step 501 is optional. In this application, steps indicated by dashed boxes or dashed lines are optional steps.

In a possible implementation, the receiving end sends the first trigger request to the transmitting end based on reception performance or a mobility status of the receiving end. Alternatively, the receiving end sends the first trigger request to the transmitting end when the receiving end determines that beam scanning needs to be performed. When the reception performance or the mobility status of the receiving end undergoes a significant change (for example, an SNR of a received signal of the receiving end is lower than a specific threshold or a moving speed of the receiving end exceeds a specific threshold), such a change is usually caused by a change in at least one of the relative position and the relative direction between the transmitting end and the RIS. The first trigger request is sent to the transmitting end based on the reception performance or the mobility status of the receiving end, and at least one of a current relative position and a current relative direction between the transmitting end and the RIS may be obtained in a timely manner. When determining that beam scanning needs to be performed, the receiving end sends the first trigger request to the transmitting end, so that information for determining the first beam direction can be obtained in a timely manner.

502: The transmitting end sends first indication information to the receiving end in response to the first trigger request. Correspondingly, the receiving end receives the first indication information from the transmitting end. The first indication information indicates at least one of the relative position and the relative direction between the transmitting end and the RIS. Alternatively, the first indication information indicates at least one of the azimuth of the RIS, the panel orientation of the RIS, the height of the RIS, the panel pitch angle of the RIS, or the distance between the RIS and the transmitting end. Alternatively, the first indication information indicates the incident direction of the transmit beam of the transmitting end and the normal direction of the RIS. Alternatively, the first indication information indicates an identity (Identity, ID) of the RIS, the receiving end and the transmitting end may pre-store topological configuration information of the RIS, and the receiving end may determine the topology configuration information of the RIS based on the first indication information. The topological configuration information of the RIS may include: at least one of the current relative position between the transmitting end and the RIS, the current relative direction between the transmitting end and the RIS, the incident direction of the transmit beam of the transmitting end, the normal direction of the RIS, the azimuth of the RIS, the panel orientation of the RIS, the height of the RIS, the panel pitch angle of the RIS, the normal direction of the RIS, or the distance between the RIS and the transmitting end. Because the control authority of the RIS resides with the transmitting end, the transmitting end may configure the RIS and may learn of the topological configuration information of the RIS. In a possible implementation, the transmitting end may predetermine and store at least one of the relative position and the relative direction between the transmitting end and the RIS, and update at least one of the relative position and the relative direction between the transmitting end and the RIS stored in the transmitting end. In a possible implementation, the transmitting end may predetermine and store the incident direction of the transmit beam of the transmitting end and the normal direction of the RIS, and update the incident direction of the transmit beam of the transmitting end and the normal direction of the RIS stored in the transmitting end. In a possible implementation, the transmitting end may predetermine and store the topological configuration information of the RIS.

Step 501 and step 502 may be replaced with: the transmitting end sends the first indication information to the receiving end. In a possible implementation, when the topological configuration information of the RIS changes or a RIS serving the receiving end is switched to the RIS, the transmitting end sends the first indication information to the receiving end. In this way, the receiving end can obtain in a timely manner at least one of the current relative position and the current relative direction between the transmitting end and the RIS, or at least one of a current azimuth of the RIS, a current panel orientation of the RIS, a current height of the RIS, a current panel pitch angle of the RIS, a current normal direction of the RIS, or a current distance between the RIS and the transmitting end. In a possible implementation, the transmitting end periodically sends the first indication information to the receiving end, so that information for determining the relative position and/or the relative direction between the base station and the RIS can be periodically updated. For example, a period in which the transmitting end sends the first indication information to the receiving end is longer than a beam measurement period (or a beam scanning period) of the transmitting end. 503: The receiving end determines the first beam direction based on the first indication information.

In a possible implementation, an included angle between the first beam direction and the normal direction of the RIS is equal to an included angle between the incident direction of the transmit beam of the transmitting end and the normal direction of the RIS. Alternatively, the first beam direction and the incident direction of the transmit beam of the transmitting end are symmetric with respect to the normal direction of the RIS. In a possible implementation, a difference between the included angle between the first beam direction and the normal direction of the RIS and the included angle between the direction of the transmit beam of the transmitting end and the normal direction of the RIS is less than or equal to a preset value. Theoretically, a difference between the included angle between the first beam direction and the normal direction of the RIS and the included angle between the incident direction of the transmit beam of the transmitting end and the normal direction of the RIS is equal to 0, that is, the two included angles are equal. During actual application, specific factors may cause the difference between the two included angles not to be 0 but a real number approximate to 0, that is, a preset value (greater than 0). The preset value may be a maximum value of the difference between the two included angles, that is, a maximum allowable error. In a possible implementation, the first beam direction includes a horizontal azimuth direction and a vertical-dimension pitch angle direction. The horizontal azimuth direction includes a height of the RIS and a pitch angle/tilt angle of the RIS, while the vertical-dimension pitch angle may include an azimuth and an orientation of the RIS. In this application, a manner of determining the first beam direction is described by using an example in which the first beam direction and the incident direction of the transmit beam of the transmitting end are symmetric with respect to the normal direction of the RIS. The receiving end may further determine the first beam direction in another manner. This is not limited herein. Because the first beam direction and the incident direction of the transmit beam of the transmitting end are symmetric with respect to the normal direction of the RIS, the first beam direction may be determined based on the incident direction of the transmit beam of the transmitting end and the normal direction of the RIS. In other words, after the incident direction of the transmit beam of the transmitting end and the normal direction of the RIS are obtained, the first beam direction may be determined based on the incident direction of the transmit beam of the transmitting end and the normal direction of the RIS. An example of determining the first beam direction based on the incident direction of the transmit beam of the transmitting end and the normal direction of the RIS is as follows: In a system-predefined coordinate system, it is assumed that the incident beam direction of the transmit beam of the transmitting end is (*αₕ*, *αᵥ*), where the two variables respectively correspond to horizontal and vertical dimensions of the beam direction with respect to the coordinate system. It is assumed that the normal direction of the RIS is (*θₕ*, *θᵥ*). Because the included angle between the first beam direction and the normal direction of the RIS is equal to the included angle between the beam direction of the transmit beam of the transmitting end and the normal direction of the RIS, the first beam direction may be defined as (2*θₕ* - *αₕ*, 2*θᵥ*, - *αᵥ*).

If the first indication information indicates the incident direction of the transmit beam of the transmitting end and the normal direction of the RIS, for a manner of determining the first beam direction based on the first indication information, refer to the foregoing example of determining the first beam direction based on the incident direction of the transmit beam of the transmitting end and the normal direction of the RIS. If the first indication information indicates the relative position between the transmitting end and the RIS, an example of determining the first beam direction based on the first indication information is as follows: In the system-predefined coordinate system, it is assumed that the relative position of the transmitting end is (0,0,0), and the relative position of the RIS is (*x*2, *y*₂, *z*₂). The incident beam direction of the transmit beam is (*αₕ*, *αᵥ*), where the two variables respectively correspond to horizontal and vertical dimensions of the beam direction with respect to the coordinate system. It may be obtained that the normal direction of the RIS is ( ${tan}^{- 1} \left(\frac{{y}_{2}}{{x}_{2}}\right) , {tan}^{- 1} \left(\frac{{z}_{2}}{{x}_{2}}\right)$), and is defined as (*θₕ*, *θᵥ*). Because the included angle between the first beam direction and the normal direction of the RIS is equal to the included angle between the beam direction of the transmit beam of the transmitting end and the normal direction of the RIS, the first beam direction may be defined as (2*θₕ* - *αᵥ*, 2*θᵥ* - *αᵥ*).

If the first indication information indicates the relative direction between the transmitting end and the RIS, an example of determining the first beam direction based on the first indication information is as follows: In the system-predefined coordinate system, the relative direction between the transmitting end and the RIS is Δ₁, and the relative direction of the first beam may be 2Δ₁ or -Δ₁.

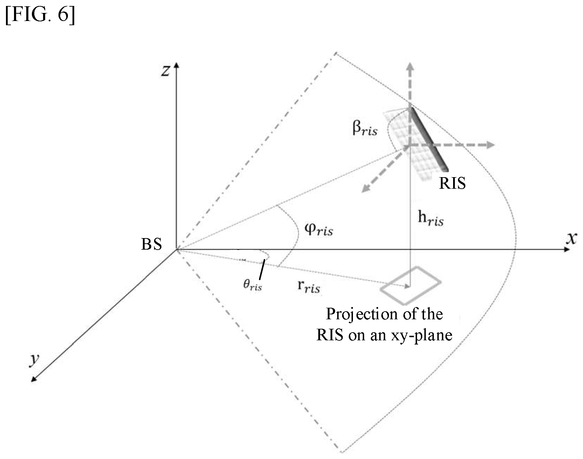

If the first indication information indicates at least one of the azimuth of the RIS, the panel orientation of the RIS, the height of the RIS, the panel pitch angle of the RIS, or the distance between the RIS and the transmitting end, an example of determining the first beam direction based on the first indication information is as follows: First, the relative position between the transmitting end and the RIS is determined based on information indicated by the first indication information. Then, the first beam direction is determined based on the relative position between the transmitting end and the RIS. For example, the first indication information indicates one or more of the following: the azimuth of the RIS (that is, an azimuth of the RIS with respect to a normal direction of an antenna array of a base station), the panel orientation of the RIS, the height of the RIS, the panel pitch angle of the RIS (that is, a pitch angle of an array center of the RIS with respect to an antenna array center of a base station), or the distance between the RIS and the base station. The first indication information may further indicate position information (optional) and an orientation angle (optional) of the base station. In a possible implementation, the UE learns of the position information and the orientation angle of the base station in a manner of sensing, ranging, information exchange, or the like. A manner in which the UE learns of the position information and the orientation angle of the base station is not limited in this application. FIG. 6 is a diagram of a relative position between a base station (an example of the transmitting end) and the RIS according to an embodiment of this application. As shown in FIG. 6, φ*ᵣᵢₛ₋ₖ* indicates the pitch angle of the array center of the RIS with respect to the antenna array center of the base station. *θᵣᵢₛ₋ₖ* indicates the azimuth of the RIS with respect to the normal direction of the antenna array of the base station. A rectangular region on an xy-plane indicates a projection (projection) of the RIS onto the xy-plane. r*ᵣᵢₛ* indicates the distance between the base station and the RIS. h*ᵣᵢₛ₋ₖ* indicates the height of the RIS. β*ᵣᵢₛ₋ₖ* indicates the orientation of the RIS, and k indicates that the base station is a k^{th} base station. For example, the relative position relationship between the base station and the RIS meets the following formula: ${x}_{rk} = {x}_{bi} + {r}_{k} cos \left({φ}_{ris - k}\right) cos \left({θ}_{bs - i}-{θ}_{ris - k}\right)$ (1); ${y}_{rk} = {y}_{bi} + {r}_{k} cos \left({φ}_{ris - k}\right) sin \left({θ}_{bs - i}-{θ}_{ris - k}\right)$ (2); ${z}_{rk} = {z}_{bi} + {r}_{k} sin \left({φ}_{ris - k}\right)$ (3).

Position coordinates of the RIS are (x*ᵣₖ*, y*ᵣₖ*, *zᵣₖ*), and position coordinates of the base station are (x*_{bi}*, y*_{bi}*, z*_{bi}*). φ*ᵣᵢₛ₋ₖ* indicates the pitch angle of the array center of the RIS with respect to the antenna array center of the base station. *θ_{bs-i}* indicates the orientation angle of the base station. *θᵣᵢₛ₋ₖ* indicates the azimuth of the RIS with respect to the normal direction of the antenna array of the base station. r*ₖ* indicates the distance between the base station and the RIS. It can be learned from the formula (1), the formula (2), and the formula (3) that the receiving end may determine the position coordinates of the RIS based on the orientation angle of the base station, the position coordinates of the base station, the pitch angle of the array center of the RIS with respect to the antenna array center of the base station, the azimuth of the RIS with respect to the normal direction of the antenna array of the base station, and the distance between the base station and the RIS. The receiving end may further learn of the position coordinates of the RIS in another manner. This is not limited in this application. The receiving end may determine the relative position and/or the relative direction between the transmitting end and the RIS based on the position coordinates of the transmitting end and the position coordinates of the RIS. An example in which the receiving end may determine the relative direction between the transmitting end and the RIS based on the position coordinates of the transmitting end and the position coordinates of the RIS is as follows: An example in which the coordinates of the transmitting end are defined as (0, 0, 0) is used. It is further assumed that the position coordinates of the RIS are (x*ᵣ*, y*ᵣ*, z*ᵣ*), and the relative direction between the transmitting end and the RIS is represented as an incident direction of the transmitting end with respect to the RIS panel in the system-defined coordinate system. The direction is a two-dimensional vector Δ, expressed as $Δ = \left({tan}^{- 1}\left(\frac{{y}_{r}}{{x}_{r}}\right),{tan}^{- 1}\left(\frac{{z}_{r}}{{x}_{r}}\right)\right)$. Further, information such as the first beam direction may be further obtained based on the incident direction together with the normal direction of the RIS. A process is the same as that described above.

Step 501 to step 503 may be replaced with: determine the first beam direction based on fourth indication information. The fourth indication information indicates at least one of the relative position and the relative direction between the transmitting end and the RIS. Alternatively, the fourth indication information indicates at least one of the azimuth of the RIS, the panel orientation of the RIS, the height of the RIS, the panel pitch angle of the RIS, or the distance between the RIS and the transmitting end. Alternatively, the fourth indication information indicates the incident direction of the transmit beam of the transmitting end and the normal direction of the RIS. The fourth indication information may be already available at the receiving end. For example, the transmitting end periodically sends the first indication information, and the fourth indication information is first indication information previously received by the receiving end. For another example, the fourth indication information is information preconfigured by the receiving end. For another example, the fourth indication information is obtained by the receiving end through interaction with the transmitting end before performing the method procedure in FIG. 5. A manner in which the receiving end obtains the fourth indication information is not limited in this application.

504: The transmitting end sends third indication information to the receiving end.

Correspondingly, the receiving end receives the third indication information from the transmitting end. The third indication information indicates an order in which the transmitting end sends a plurality of measurement reference signals. In a possible implementation, the order in which the transmitting end sends the plurality of measurement reference signals may be an order of codewords in a scanning codebook agreed on between the transmitting end and the receiving end. Each codeword corresponds to one measurement reference signal. Step 504 is optional. Step 504 may be performed before step 501, or may be performed after any one of step 501 to step 503.

Step 504 may be replaced with: the transmitting end and the receiving end interact to exchange the order in which the transmitting end sends the plurality of measurement reference signals. An example in which the transmitting end and the receiving end interact to exchange the order in which the transmitting end sends the plurality of measurement reference signals is as follows: The transmitting end sends a first message to the receiving end, where the first message indicates the order in which the transmitting end sends the plurality of measurement reference signals. For example, the first message indicates that the plurality of measurement reference signals are successively sent in an order of codewords in a scanning codebook #1. After receiving the first message, the receiving end sends a second message to the transmitting end, where the second message indicates that the receiving end successfully receives the first message. Another example in which the transmitting end and the receiving end interact to exchange the order in which the transmitting end sends the plurality of measurement reference signals is as follows: The receiving end sends a third message to the transmitting end, where the third message is used to request the transmitting end to successively send the plurality of measurement reference signals in an order of codewords in a scanning codebook #1. After receiving the third message, the transmitting end sends a fourth message to the receiving end, where the fourth message indicates that the transmitting end agrees to successively send the plurality of measurement reference signals in the order of codewords in the scanning codebook #1. In a possible implementation, the transmitting end and the receiving end pre-agree on the order in which the transmitting end sends the plurality of measurement reference signals, for example, agree that the transmitting end successively sends the plurality of measurement reference signals in the order of codewords in the scanning codebook #1. The transmitting end and the receiving end may alternatively, in another manner, interact to exchange or agree on the order in which the transmitting end successively sends the plurality of measurement reference signals using different beams. This is not limited in this application.

In a possible implementation, the third indication information further indicates a mode in which the receiving end performs beam measurement, that is, a mode in which the receiving end determines the target beam based on the first beam direction and measurement results of the plurality of measurement reference signals and performs feedback. For example, a mode in which the receiving end performs beam measurement includes at least a conventional mode and a target mode. When operating in the conventional mode, the receiving end feeds back a beam with highest power. When operating in the target mode, the receiving end determines the target beam based on the first beam direction and the measurement results of the plurality of measurement reference signals, and feeds back the target beam. In this implementation, the third indication information may implicitly indicate a mode in which the receiving end performs beam measurement, so that signaling overheads can be reduced.

505: The transmitting end sends fifth indication information to the receiving end.

Correspondingly, the receiving end receives the fifth indication information from the transmitting end. The fifth indication information indicates a mode in which the receiving end performs beam measurement, that is, a target mode in which the receiving end determines the target beam based on the first beam direction and measurement results of the plurality of measurement reference signals and performs feedback. For example, the fifth indication information indicates the receiving end to perform beam measurement in the target mode. When operating in the target mode, the receiving end determines the target beam based on the first beam direction and the measurement results of the plurality of measurement reference signals, and feeds back the target beam. The first beam direction is determined based on a relative position and/or a relative direction between the transmitting end and the RIS. In a possible implementation, for example, a mode in which the receiving end performs beam measurement includes at least a conventional mode and a target mode, and the mode in which the receiving end performs beam measurement may be implemented using 1 bit or 2 bits. For example, 0 indicates the conventional mode and 1 indicates the target mode. For another example, 00 indicates the conventional mode, and 11 indicates the target mode. Step 505 is optional. Because the third indication information further indicates a mode in which the receiving end performs beam measurement, the transmitting end does not need to send the fifth indication information. In a possible implementation, the receiving end may preconfigure a beam measurement mode.

506: The transmitting end sends the plurality of measurement reference signals to the receiving end via the RIS. Correspondingly, the receiving end receives the plurality of measurement reference signals sent by the transmitting end via the RIS. For step 506, refer to step 401.

507: The receiving end determines the target beam based on the first beam direction, the order in which the transmitting end sends the plurality of measurement reference signals, and the measurement results of the plurality of measurement reference signals.

For step 507, refer to step 402.

508: The receiving end sends a measurement result of the target beam to the transmitting end.

Correspondingly, the transmitting end receives the measurement result of the target beam from the receiving end. For step 508, refer to step 403.

509: The transmitting end sends data/signaling to the receiving end using the target beam.

Correspondingly, the receiving end receives the data/signaling sent by the transmitting end to the receiving end using the target beam.

In this embodiment of this application, the receiving end determines the target beam based on the first beam direction, the order in which the transmitting end sends the plurality of measurement reference signals, and the measurement results of the plurality of measurement reference signals, and sends the measurement result of the target beam to the transmitting end. The target beam determined by the receiving end based on the first beam direction, the order in which the transmitting end sends the plurality of measurement reference signals, and the measurement results of the plurality of measurement reference signals is usually a relatively optimal beam. The target beam determined by the receiving end based on the first beam direction, the order in which the transmitting end sends the plurality of measurement reference signals, and the measurement results of the plurality of measurement reference signals is better than a beam with highest received power. Therefore, in a beam measurement process, the measurement result of the target beam is sent to the transmitting end, so that impact on transmission performance caused by false feedback of a sidelobe beam (a beam with highest received power) can be avoided, thereby improving beam measurement and transmission performance.

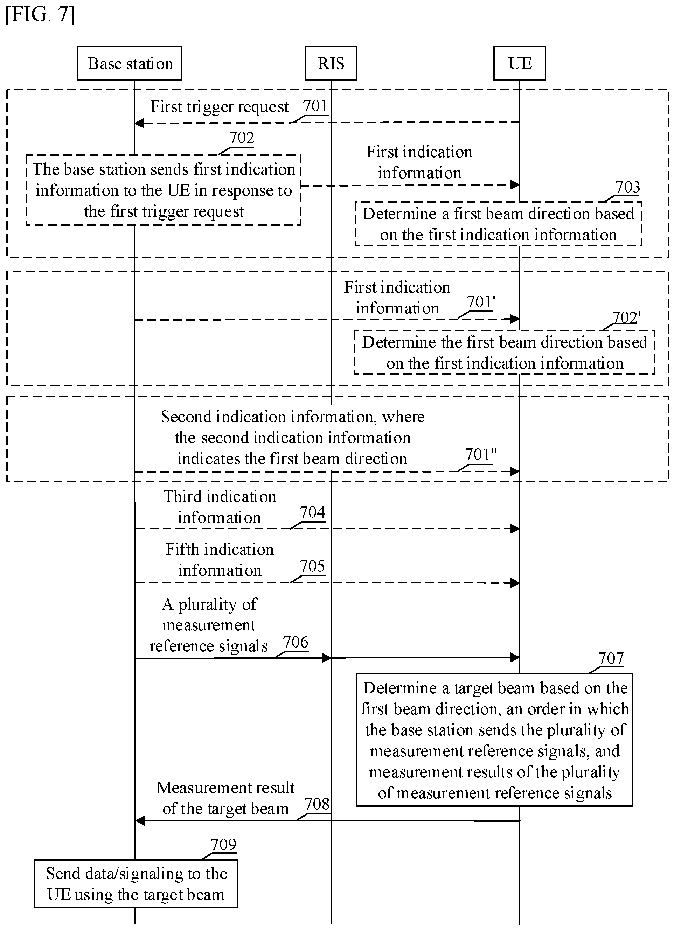

FIG. 7 is a flowchart of another communication method according to an embodiment of this application. A method procedure in FIG. 7 is a possible implementation of the method described in FIG. 4 or FIG. 5. A base station in FIG. 7 is an example of the transmitting end in FIG. 4, and UE in FIG. 7 is an example of the receiving end in FIG. 4. In the method procedure in FIG. 7, control authority of a RIS may reside with the base station. As shown in FIG. 7, the method includes the following steps.

701: The UE sends a first trigger request to the base station.

Correspondingly, the base station receives the first trigger request from the UE.

702: The base station sends first indication information to the UE in response to the first trigger request. Correspondingly, the UE receives the first indication information from the base station.

703: The UE determines a first beam direction based on the first indication information.

For step 701 to step 703, refer to step 501 to step 503 in FIG. 5. Step 701 to step 703 are optional.

701': The base station sends the first indication information to the UE.

Correspondingly, the UE receives the first indication information from the base station. In a possible implementation, when the topological configuration information of the RIS changes or a RIS serving the UE is switched to the RIS, the base station sends the first indication information to the UE. In this way, the UE can obtain in a timely manner at least one of a current relative position and a current relative direction between the base station and the RIS, or at least one of a current azimuth of the RIS, a current panel orientation of the RIS, a current height of the RIS, a current panel pitch angle of the RIS, a current normal direction of the RIS, or a current distance between the RIS and the base station. In a possible implementation, the base station periodically sends the first indication information to the UE, so that information for determining the relative position and/or the relative direction between the base station and the RIS can be periodically updated.

702': The UE determines the first beam direction based on the first indication information.

701": The base station sends second indication information to the UE.

Correspondingly, the UE receives the second indication information from the base station. The second indication information indicates the first beam direction.

Step 701 to step 703, step 701' and step 702', and step 701" are three parallel manners in which the UE learns of the first beam direction. The method procedure in FIG. 7 may include any one of step 701 to step 703, step 701' and step 702', and step 701". The UE may further learn of, by interacting with the base station, the first beam direction that needs to be referenced for beam measurement, or the UE may obtain the first beam direction in another manner. This is not limited in this application.

704: The base station sends third indication information to the UE.

Correspondingly, the UE receives the third indication information from the base station. The third indication information indicates an order in which the base station sends a plurality of measurement reference signals. For step 704 to step 709, refer to step 504 to step 509 in FIG. 5. Details are not described herein again.

705: The base station sends fifth indication information to the UE.

Correspondingly, the UE receives the fifth indication information from the base station. The fifth indication information indicates a mode in which the UE performs beam measurement, that is, a target mode in which the UE determines a target beam based on the first beam direction and measurement results of the plurality of measurement reference signals and performs feedback.

706: The base station sends the plurality of measurement reference signals to the UE via the RIS.

Correspondingly, the UE receives the plurality of measurement reference signals sent by the base station via the RIS.

For step 506, refer to step 401.

707: The UE determines the target beam based on the first beam direction, the order in which the base station sends the plurality of measurement reference signals, and the measurement results of the plurality of measurement reference signals.

Before performing step 707, the UE may perform the following operation: performing beam measurement based on the plurality of received measurement reference signals, to obtain the measurement results of the plurality of measurement reference signals. For example, the UE calculates information such as RSRP and an SNR of each measurement reference signal based on the plurality of received measurement reference signals. The UE may perform beam measurement based on the plurality of received measurement reference signals by using a conventional technical means well known in the art, and details are not described herein again.

708: The UE sends a measurement result of the target beam to the base station.

Correspondingly, the base station receives the measurement result of the target beam from the UE. For step 708, refer to step 403.

709: The base station sends data/signaling to the UE using the target beam.

Correspondingly, the UE receives the data/signaling sent by the base station to the UE using the target beam.

In this embodiment of this application, the UE determines the target beam based on the first beam direction, the order in which the base station sends the plurality of measurement reference signals, and the measurement results of the plurality of measurement reference signals, and sends the measurement result of the target beam to the base station. The target beam determined by the UE based on the first beam direction, the order in which the base station sends the plurality of measurement reference signals, and the measurement results of the plurality of measurement reference signals is usually a relatively optimal beam. The target beam determined by the UE based on the first beam direction, the order in which the base station sends the plurality of measurement reference signals, and the measurement results of the plurality of measurement reference signals is better than a beam with highest received power. Therefore, in a beam measurement process, the measurement result of the target beam is sent to the base station, so that impact on transmission performance caused by false feedback of a sidelobe beam (a beam with highest received power) can be avoided, thereby improving beam measurement and transmission performance.

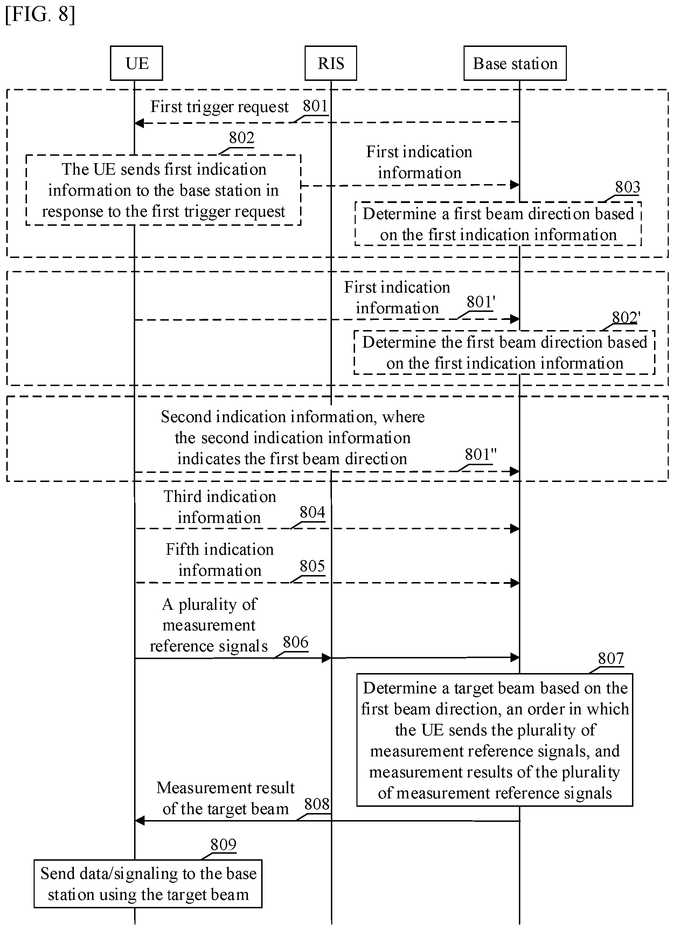

FIG. 8 is a flowchart of another communication method according to an embodiment of this application. A method procedure in FIG. 8 is a possible implementation of the method described in FIG. 4 or FIG. 5. UE in FIG. 8 is an example of the transmitting end in FIG. 4, and a base station in FIG. 8 is an example of the receiving end in FIG. 4. In the method procedure in FIG. 8, control authority of a RIS may reside with the UE. As shown in FIG. 8, the method includes the following steps.

801: The base station sends a first trigger request to the UE.

Correspondingly, the UE receives the first trigger request from the base station.

802: The UE sends first indication information to the base station in response to the first trigger request. Correspondingly, the base station receives the first indication information from the UE.

803: The base station determines a first beam direction based on the first indication information.

For step 801 to step 803, refer to step 501 to step 503 in FIG. 5. Step 801 to step 803 are optional. In a possible implementation, the control authority of the RIS may reside with the base station. Step 801 to step 803 may be replaced with: the base station determines the first beam direction based on topological configuration information of the RIS. 801': The UE sends the first indication information to the base station.

Correspondingly, the base station receives the first indication information from the UE. In a possible implementation, when the topological configuration information of the RIS changes or a RIS serving the foregoing UE is switched (or changes), the UE sends the first indication information to the base station. In this way, the base station can obtain in a timely manner at least one of a current relative position and a current relative direction between the UE and the RIS, or at least one of a current azimuth of the RIS, a current panel orientation of the RIS, a current height of the RIS, a current panel pitch angle of the RIS, a current normal direction of the RIS, or a current distance between the RIS and the UE. In a possible implementation, the UE periodically sends the first indication information to the base station, so that information for determining the relative position and/or the relative direction between the UE and the RIS can be periodically updated.

802': The base station determines a first beam direction based on the first indication information.

801": The UE sends second indication information to the base station.

Correspondingly, the base station receives the second indication information from the UE. The second indication information indicates the first beam direction.

Step 801 to step 803, step 801' and step 802', and step 801" are three parallel manners in which the base station learns of the first beam direction. The method procedure in FIG. 8 may include any one of step 801 to step 803, step 801' and step 802', and step 801". The base station may further learn of, by interacting with the UE, the first beam direction that needs to be referenced for beam measurement, or the base station may obtain the first beam direction in another manner. This is not limited in this application.

804: The UE sends third indication information to the base station.

Correspondingly, the base station receives the third indication information from the UE. The third indication information indicates an order in which the UE sends a plurality of measurement reference signals. For step 804 to step 809, refer to step 504 to step 509 in FIG. 5. Details are not described herein again.

805: The UE sends fifth indication information to the base station.

Correspondingly, the base station receives the fifth indication information from the UE. The fifth indication information indicates a mode in which the base station performs beam measurement, that is, a target mode in which the base station determines a target beam based on the first beam direction and measurement results of the plurality of measurement reference signals and performs feedback.

806: The UE sends the plurality of measurement reference signals to the base station via the RIS.

Correspondingly, the base station receives the plurality of measurement reference signals sent by the UE via the RIS. 807: The base station determines the target beam based on the first beam direction, the order in which the UE sends the plurality of measurement reference signals, and the measurement results of the plurality of measurement reference signals.

808: The base station sends a measurement result of the target beam to the UE.

Correspondingly, the UE receives the measurement result of the target beam from the base station.

809: The UE sends data/signaling to the base station using the target beam.

Correspondingly, the base station receives the data/signaling sent by the UE to the base station using the target beam. In this embodiment of this application, the base station determines the target beam based on the first beam direction, the order in which the UE sends the plurality of measurement reference signals, and the measurement results of the plurality of measurement reference signals, and sends the measurement result of the target beam to the UE. The target beam determined by the base station based on the first beam direction, the order in which the UE sends the plurality of measurement reference signals, and the measurement results of the plurality of measurement reference signals is usually a relatively optimal beam. The target beam determined by the base station based on the first beam direction, the order in which the UE sends the plurality of measurement reference signals, and the measurement results of the plurality of measurement reference signals is better than a beam with highest received power. Therefore, in a beam measurement process, the measurement result of the target beam is sent to the UE, so that impact on transmission performance caused by false feedback of a sidelobe beam (a beam with highest received power) can be avoided, thereby improving beam measurement and transmission performance.

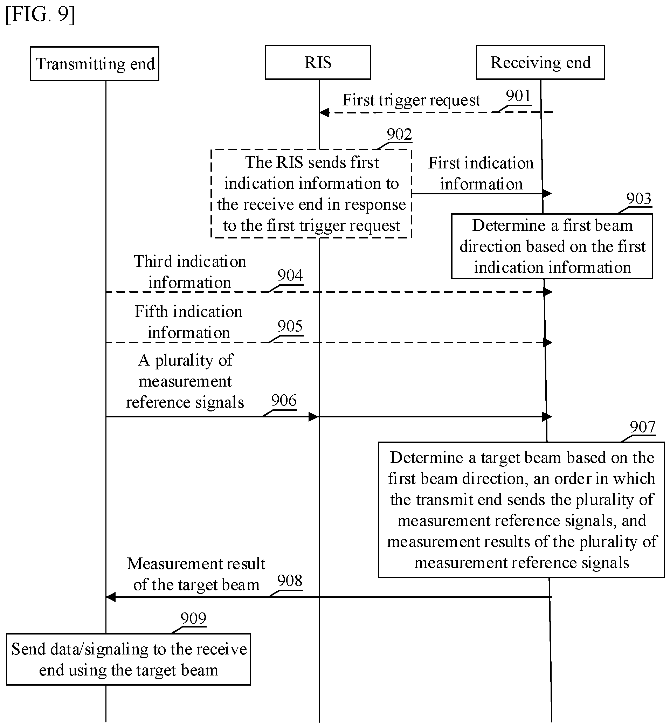

FIG. 9 is a flowchart of another communication method according to an embodiment of this application. A method procedure in FIG. 9 is a possible implementation of the method described in FIG. 4. As shown in FIG. 9, the method includes the following steps.

901: A receiving end sends a first trigger request to a RIS.

Correspondingly, the RIS receives the first trigger request from the receiving end. The first trigger request is used to request the RIS to send information used by the receiving end to determine a first beam direction. In other words, the first trigger request is used to request the RIS to send its topological configuration information, and the topological configuration information of the RIS is used by the receiving end to determine the first beam direction.

902: The RIS sends first indication information to the receiving end in response to the first trigger request.

The first indication information indicates at least one of a relative position and a relative direction between the transmitting end and the RIS. Alternatively, the first indication information indicates the topological configuration information of the RIS. Alternatively, the first indication information indicates an incident direction of a transmit beam of the transmitting end and a normal direction of the RIS. A prerequisite of this embodiment of this application is that the RIS has an information sending capability, for example, periodically sending the first indication information or sending the first indication information after receiving a trigger signal. In a possible implementation, control authority of the RIS resides with the transmitting end, and the transmitting end may configure the RIS, so that the RIS sends the first indication information to the receiving end after receiving the first trigger request.

Step 901 and step 902 may be replaced with: the RIS periodically sends the first indication information, for example, sends the first indication information in a broadcast manner. The RIS periodically sends the first indication information, so that the UE served by the RIS can determine the first beam direction based on the first indication information, to better perform beam measurement.

903: The receiving end determines the first beam direction based on the first indication information.

For step 903 to step 909, refer to step 503 to step 509 in FIG. 5.

904: The transmitting end sends third indication information to the receiving end.

Correspondingly, the receiving end receives the third indication information from the transmitting end. The third indication information indicates an order in which the transmitting end sends a plurality of measurement reference signals.

905: The transmitting end sends fifth indication information to the receiving end.

Correspondingly, the receiving end receives the fifth indication information from the transmitting end. The fifth indication information indicates a mode in which the receiving end performs beam measurement, that is, a target mode in which the receiving end determines the target beam based on the first beam direction and measurement results of the plurality of measurement reference signals and performs feedback.

906: The transmitting end sends the plurality of measurement reference signals to the receiving end via the RIS.

Correspondingly, the receiving end receives the plurality of measurement reference signals sent by the transmitting end via the RIS.

907: The receiving end determines the target beam based on the first beam direction, the order in which the transmitting end sends the plurality of measurement reference signals, and the measurement results of the plurality of measurement reference signals.

908: The receiving end sends a measurement result of the target beam to the transmitting end.

Correspondingly, the transmitting end receives the measurement result of the target beam from the receiving end. 909: The transmitting end sends data/signaling to the receiving end using the target beam.

Correspondingly, the receiving end receives the data/signaling sent by the transmitting end to the receiving end using the target beam.

In this embodiment of this application, the receiving end determines the target beam based on the first beam direction, the order in which the transmitting end sends the plurality of measurement reference signals, and the measurement results of the plurality of measurement reference signals, and sends the measurement result of the target beam to the transmitting end. The target beam determined by the receiving end based on the first beam direction, the order in which the transmitting end sends the plurality of measurement reference signals, and the measurement results of the plurality of measurement reference signals is usually a relatively optimal beam. The target beam determined by the receiving end based on the first beam direction, the order in which the transmitting end sends the plurality of measurement reference signals, and the measurement results of the plurality of measurement reference signals is better than a beam with highest received power. Therefore, in a beam measurement process, the measurement result of the target beam is sent to the transmitting end, so that impact on transmission performance caused by false feedback of a sidelobe beam (a beam with highest received power) can be avoided, thereby improving beam measurement and transmission performance.

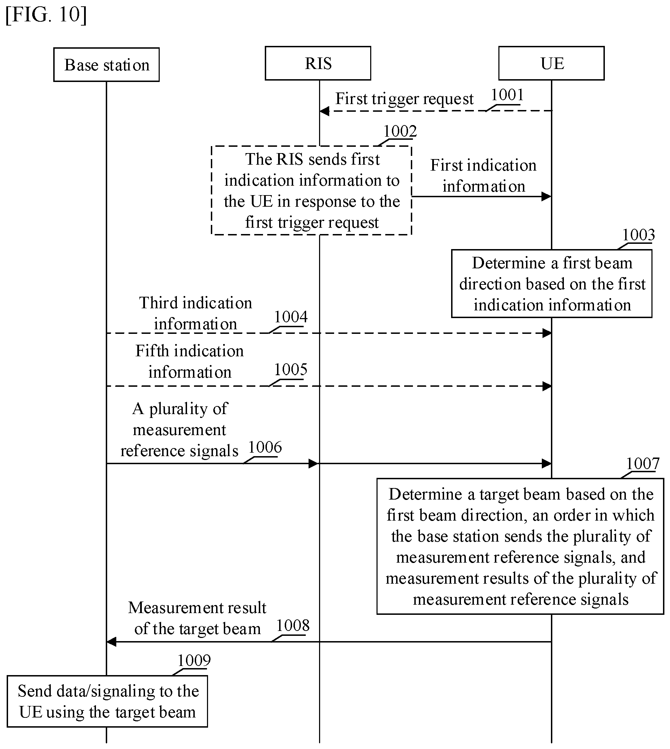

FIG. 10 is a flowchart of another communication method according to an embodiment of this application. A method procedure in FIG. 10 is a possible implementation of the method described in FIG. 9. A base station in FIG. 10 is an example of the transmitting end in FIG. 9, and UE in FIG. 10 is an example of the receiving end in FIG. 9. As shown in FIG. 10, the method includes the following steps.

1001: The UE sends a first trigger request to a RIS.

Correspondingly, the RIS receives the first trigger request from the UE. The first trigger request is used to request the RIS to send information used by the UE to determine a first beam direction. In other words, the first trigger request is used to request the RIS to send its topological configuration information, and the topological configuration information of the RIS is used by the UE to determine the first beam direction.

1002: The RIS sends first indication information to the UE in response to the first trigger request.

The first indication information indicates at least one of a relative position and a relative direction between the base station and the RIS. Alternatively, the first indication information indicates the topological configuration information of the RIS. Alternatively, the first indication information indicates an incident direction of a transmit beam of the base station and a normal direction of the RIS. A prerequisite of this embodiment of this application is that the RIS has an information sending capability, for example, periodically sending the first indication information or sending the first indication information after receiving a trigger signal. In a possible implementation, control authority of the RIS resides with the base station, and the base station may configure the RIS, so that the RIS sends the first indication information to the UE after receiving the first trigger request.

Step 1001 and step 1002 may be replaced with: the RIS periodically sends the first indication information, for example, sends the first indication information in a broadcast manner. The RIS periodically sends the first indication information, so that the UE served by the RIS can determine the first beam direction based on the first indication information, to better perform beam measurement.

1003: The UE determines a first beam direction based on the first indication information.

For step 1003 to step 1009, refer to step 503 to step 509 in FIG. 5. In a possible implementation, the control authority of the RIS may reside with the UE. Step 1001 to step 1003 may be replaced with: the UE determines the first beam direction based on topological configuration information of the RIS.

1004: The base station sends third indication information to the UE.

Correspondingly, the UE receives the third indication information from the base station. The third indication information indicates an order in which the base station sends a plurality of measurement reference signals.

1005: The base station sends fifth indication information to the UE.

Correspondingly, the UE receives the fifth indication information from the base station. The fifth indication information indicates a mode in which the UE performs beam measurement, that is, a target mode in which the UE determines a target beam based on the first beam direction and measurement results of the plurality of measurement reference signals and performs feedback.

1006: The base station sends the plurality of measurement reference signals to the UE via the RIS.

Correspondingly, the UE receives the plurality of measurement reference signals sent by the base station via the RIS. 1007: The UE determines the target beam based on the first beam direction, the order in which the base station sends the plurality of measurement reference signals, and the measurement results of the plurality of measurement reference signals.

1008: The UE sends a measurement result of the target beam to the base station.

Correspondingly, the base station receives the measurement result of the target beam from the UE.

1009: The base station sends data/signaling to the UE using the target beam.

Correspondingly, the UE receives the data/signaling sent by the base station to the UE using the target beam.

In this embodiment of this application, the UE determines the target beam based on the first beam direction, the order in which the base station sends the plurality of measurement reference signals, and the measurement results of the plurality of measurement reference signals, and sends the measurement result of the target beam to the base station. The target beam determined by the UE based on the first beam direction, the order in which the base station sends the plurality of measurement reference signals, and the measurement results of the plurality of measurement reference signals is usually a relatively optimal beam. The target beam determined by the UE based on the first beam direction, the order in which the base station sends the plurality of measurement reference signals, and the measurement results of the plurality of measurement reference signals is better than a beam with highest received power. Therefore, in a beam measurement process, the measurement result of the target beam is sent to the base station, so that impact on transmission performance caused by false feedback of a sidelobe beam (a beam with highest received power) can be avoided, thereby improving beam measurement and transmission performance.

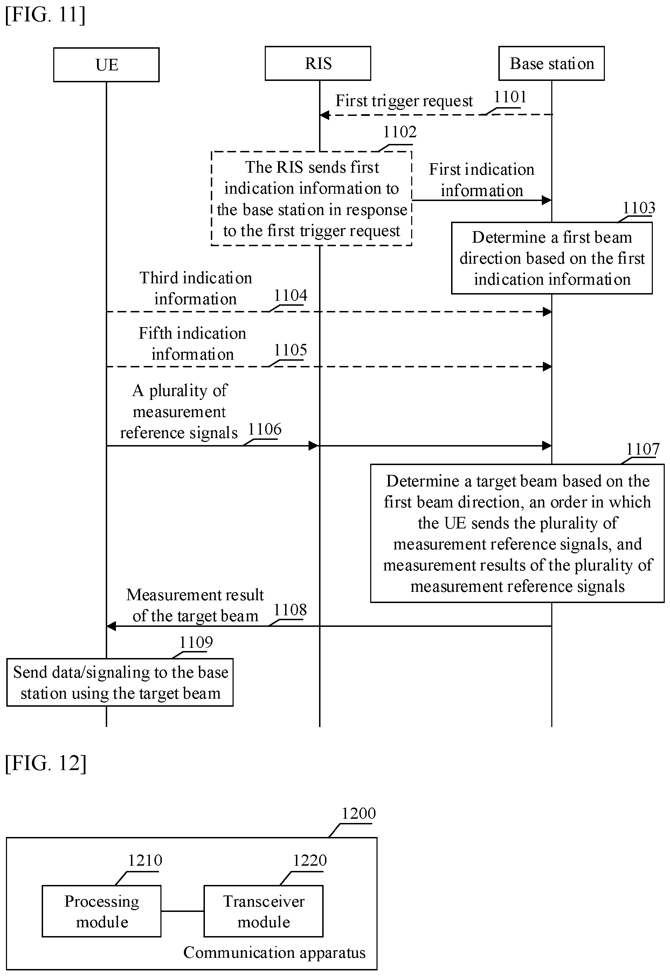

FIG. 11 is a flowchart of another communication method according to an embodiment of this application. A method procedure in FIG. 11 is a possible implementation of the method described in FIG. 9. UE in FIG. 11 is an example of the transmitting end in FIG. 9, and a base station in FIG. 11 is an example of the receiving end in FIG. 9. As shown in FIG. 11, the method includes the following steps.

1101: The base station sends a first trigger request to a RIS.

Correspondingly, the RIS receives the first trigger request from the base station. The first trigger request is used to request the RIS to send information used by the base station to determine a first beam direction. In other words, the first trigger request is used to request the RIS to send its topological configuration information, and the topological configuration information of the RIS is used by the base station to determine the first beam direction.

1102: The RIS sends first indication information to the base station in response to the first trigger request.

The first indication information indicates at least one of a relative position and a relative direction between the UE and the RIS. Alternatively, the first indication information indicates the topological configuration information of the RIS. Alternatively, the first indication information indicates an incident direction of a transmit beam of the UE and a normal direction of the RIS. A prerequisite of this embodiment of this application is that the RIS has an information sending capability, for example, periodically sending the first indication information or sending the first indication information after receiving a trigger signal. In a possible implementation, control authority of the RIS resides with the UE, and the UE may configure the RIS, so that the RIS sends the first indication information to the base station after receiving the first trigger request.

Step 1101 and step 1102 may be replaced with: the RIS periodically sends the first indication information, for example, sends the first indication information in a broadcast manner. The RIS periodically sends the first indication information, so that the base station can determine the first beam direction based on the first indication information, to better perform beam measurement.

1103: The base station determines the first beam direction based on the first indication information.

For step 1103 to step 1109, refer to step 503 to step 509 in FIG. 5. In a possible implementation, the control authority of the RIS may reside with the base station. Step 1101 to step 1103 may be replaced with: the base station determines the first beam direction based on the topological configuration information of the RIS.

1104: The UE sends third indication information to the base station.

Correspondingly, the base station receives the third indication information from the UE. The third indication information indicates an order in which the UE sends a plurality of measurement reference signals.

1105: The UE sends fifth indication information to the base station.

Correspondingly, the base station receives the fifth indication information from the UE. The fifth indication information indicates a mode in which the base station performs beam measurement, that is, a target mode in which the base station determines a target beam based on the first beam direction and measurement results of the plurality of measurement reference signals and performs feedback.

1106: The UE sends the plurality of measurement reference signals to the base station via the RIS.

Correspondingly, the base station receives the plurality of measurement reference signals sent by the UE via the RIS. 1107: The base station determines the target beam based on the first beam direction, the order in which the UE sends the plurality of measurement reference signals, and the measurement results of the plurality of measurement reference signals.

1108: The base station sends a measurement result of the target beam to the UE.

Correspondingly, the UE receives the measurement result of the target beam from the base station.

1109: The UE sends data/signaling to the base station using the target beam.

Correspondingly, the base station receives the data/signaling sent by the UE to the base station using the target beam. In this embodiment of this application, the base station determines the target beam based on the first beam direction, the order in which the UE sends the plurality of measurement reference signals, and the measurement results of the plurality of measurement reference signals, and sends the measurement result of the target beam to the UE. The target beam determined by the base station based on the first beam direction, the order in which the UE sends the plurality of measurement reference signals, and the measurement results of the plurality of measurement reference signals is usually a relatively optimal beam. The target beam determined by the base station based on the first beam direction, the order in which the UE sends the plurality of measurement reference signals, and the measurement results of the plurality of measurement reference signals is better than a beam with highest received power. Therefore, in a beam measurement process, the measurement result of the target beam is sent to the UE, so that impact on transmission performance caused by false feedback of a sidelobe beam (a beam with highest received power) can be avoided, thereby improving beam measurement and transmission performance.

The following describes, with reference to the accompanying drawings, structures of communication apparatuses that can implement the communication methods provided in embodiments of this application. The following briefly describes only the communication apparatuses. For details about solution implementations, refer to the descriptions in the foregoing method embodiments. Details are not described below again.

FIG. 12 is a diagram of a structure of a communication apparatus 1200 according to an embodiment of this application. The communication apparatus 1200 may correspondingly implement functions or steps implemented by the transmitting end in the foregoing method embodiments, or may correspondingly implement functions or steps implemented by the receiving end in the foregoing method embodiments. The communication apparatus may include a processing module 1210 and a transceiver module 1220. In a possible implementation, the communication apparatus may further include a storage unit. The storage unit may be configured to store instructions (code or a program) and/or data. The processing module 1210 and the transceiver module 1220 may be coupled to the storage unit. For example, the processing module 1210 may read the instructions (the code or the program) and/or the data in the storage unit, to implement a corresponding method. The foregoing units may be independently disposed, or may be partially or completely integrated. For example, the transceiver module 1220 may include a sending module and a receiving module. The sending module may be a transmitter, and the receiving module may be a receiver. An entity corresponding to the transceiver module 1220 may be a transceiver circuit, for example, a transceiver or a communication interface.

In some possible implementations, the communication apparatus 1200 can correspondingly implement behavior and functions of the transmitting end in the foregoing method embodiments. For example, the communication apparatus 1200 may be the transmitting end, or may be a component (for example, a chip or a circuit) used in the transmitting end. For example, the transceiver module 1220 may be configured to perform all receiving or sending operations performed by the transmitting end in embodiments in FIG. 4, FIG. 5, and FIG. 9. For example, the processing module 1210 may be configured to perform all operations, except receiving and sending operations, performed by the transmitting end in embodiments in FIG. 4, FIG. 5, and FIG. 9.

In some possible implementations, the communication apparatus 1200 can correspondingly implement behavior and functions of the receiving end in the foregoing method embodiments. For example, the communication apparatus 1200 may be the receiving end, or may be a component (for example, a chip or a circuit) used in the receiving end. For example, the transceiver module 1220 may be configured to perform all receiving or sending operations performed by the receiving end in embodiments in FIG. 4, FIG. 5, and FIG. 9. For example, the processing module 1210 may be configured to perform all operations, except receiving and sending operations, performed by the receiving end in embodiments in FIG. 4, FIG. 5, and FIG. 9.

In some possible implementations, the communication apparatus 1200 can correspondingly implement behavior and functions of the base station in the foregoing method embodiments. For example, the communication apparatus 1200 may be the base station, or may be a component (for example, a chip or a circuit) used in the base station. For example, the transceiver module 1220 may be configured to perform all receiving or sending operations performed by the base station in embodiments in FIG. 7, FIG. 8, FIG. 10, and FIG. 11. For example, the processing module 1210 may be configured to perform all operations, except receiving and sending operations, performed by the base station in embodiments in FIG. 7, FIG. 8, FIG. 10, and FIG. 11.

In some possible implementations, the communication apparatus 1200 can correspondingly implement behavior and functions of the UE in the foregoing method embodiments. For example, the communication apparatus 1200 may be the UE, or may be a component (for example, a chip or a circuit) used in the UE. For example, the transceiver module 1220 may be configured to perform all receiving or sending operations performed by the UE in embodiments in FIG. 7, FIG. 8, FIG. 10, and FIG. 11. For example, the processing module 1210 may be configured to perform all operations, except receiving and sending operations, performed by the UE in embodiments in FIG. 7, FIG. 8, FIG. 10, and FIG. 11.

This application further provides an apparatus 1300. The apparatus 1300 may be a terminal device, a processor of a terminal device, or a chip. The apparatus 1300 may be configured to perform operations performed by the UE or the RIS in the foregoing method embodiments.

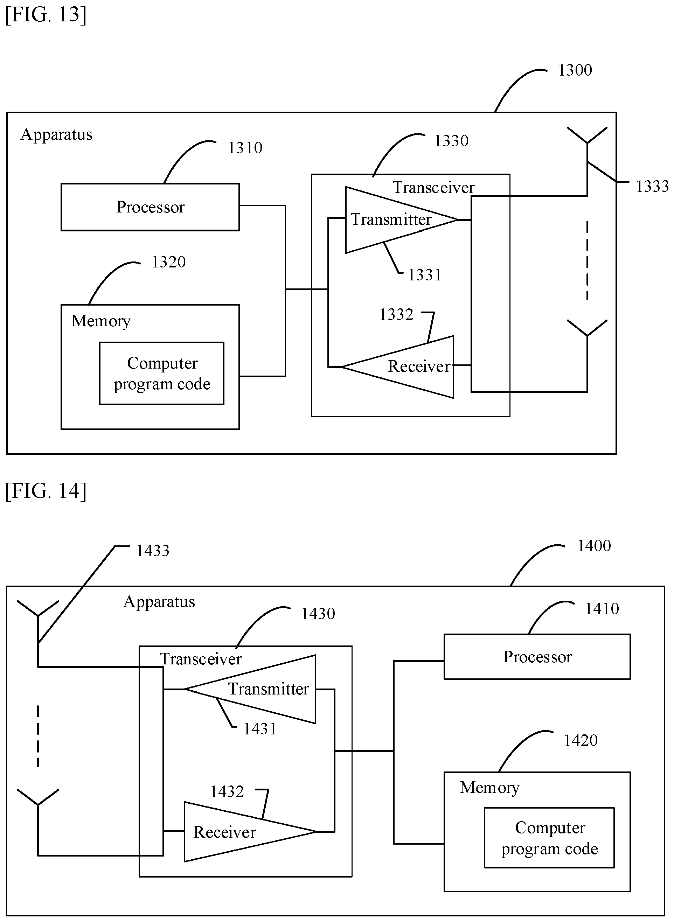

When the apparatus 1300 is a terminal device, FIG. 13 is a simplified diagram of a structure of the terminal device. As shown in FIG. 13, the terminal device includes a processor, a memory, and a transceiver. The memory may store computer program code. The transceiver includes a transmitter 1331, a receiver 1332, a radio frequency circuit (not shown in the figure), an antenna 1333, and an input/output apparatus (not shown in the figure).

The processor is mainly configured to: process a communication protocol and communication data, control the terminal device, execute a software program, process data of the software program, and the like.

The memory is mainly configured to store the software program and data.

The radio frequency circuit is mainly configured to: perform conversion between a baseband signal and a radio frequency signal, and process the radio frequency signal.

The antenna is mainly configured to receive and send a radio frequency signal in a form of an electromagnetic wave. The input/output apparatus may include a touchscreen, a display, a keyboard, or the like. The input/output apparatus is mainly configured to: receive data input by a user, and output data to the user. It should be noted that some types of terminal devices may have no input/output apparatus.

When data needs to be sent, the processor outputs the baseband signal to the radio frequency circuit after performing baseband processing on the to-be-sent data. Then, the radio frequency circuit performs radio frequency processing on the baseband signal, and then sends the radio frequency signal to the outside in a form of an electromagnetic wave through the antenna. When data is sent to the terminal device, the radio frequency circuit receives the radio frequency signal through the antenna. The radio frequency circuit converts the radio frequency signal into the baseband signal, and outputs the baseband signal to the processor. The processor converts the baseband signal into data, and processes the data. For ease of description, FIG. 13 shows only one memory, one processor, and one transceiver. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have sending and receiving functions may be considered as a transceiver module of the terminal device, and the processor that has a processing function may be considered as a processing module of the terminal device.

As shown in FIG. 13, the terminal device includes a processor 1310, a memory 1320, and a transceiver 1330. The processor 1310 may also be referred to as a processing unit, a processing board, a processing module, a processing apparatus, or the like. The transceiver 1330 may also be referred to as a transceiver unit, a transceiver machine, a transceiver apparatus, or the like.

Optionally, a component configured to implement a receiving function in the transceiver 1330 may be considered as a receiving module, and a component configured to implement a sending function in the transceiver 1330 may be considered as a sending module. That is, the transceiver 1330 includes a receiver device and a transmitter device. The transceiver may also be sometimes referred to as a transceiver machine, a transceiver module, a transceiver circuit, or the like. The receiver device may also be sometimes referred to as a receiver, a receiving module, a receiver circuit, or the like. The transmitter device may also be sometimes referred to as a transmitter, a transmitting module, a transmitter circuit, or the like.

In a possible implementation, the processor 1310 is configured to perform the processing actions of the UE in embodiments shown in FIG. 7, FIG. 8, FIG. 10, and FIG. 11. The transceiver 1330 is configured to perform receiving and sending actions of the UE in embodiments shown in FIG. 7, FIG. 8, FIG. 10, and FIG. 11.

In a possible implementation, the processor 1310 is configured to perform the processing actions of the RIS in embodiments shown in FIG. 9, FIG. 10, and FIG. 11. The transceiver 1330 is configured to perform receiving and sending actions of the RIS in embodiments shown in FIG. 9, FIG. 10, and FIG. 11.

It should be understood that FIG. 13 is merely an example rather than a limitation. The terminal device including the transceiver module and the processing module may not depend on the structure shown in FIG. 13.

When the apparatus 1300 is a chip, the chip includes a processor, a memory, and a transceiver. The transceiver may be an input/output circuit or a communication interface. The processor may be a processing module, a microprocessor, or an integrated circuit integrated on the chip. A sending operation performed by the UE or the RIS in the foregoing method embodiments may be understood as output of the chip, and a receiving operation performed by the UE or the RIS in the foregoing method embodiments may be understood as input of the chip.

This application further provides an apparatus 1400. The apparatus 1400 may be a network device or a chip. The apparatus 1400 may be configured to perform operations performed by the base station in embodiments shown in FIG. 3 to FIG. 6.

When the apparatus 1400 is a network device, for example, a base station, FIG. 14 is a simplified diagram of a structure of the base station. The base station includes a part 1410, a part 1420, and a part 1430.

The part 1410 is mainly configured to: perform baseband processing, control the base station, and the like. The part 1410 is usually a control center of the base station, may be usually referred to as a processor, and is configured to control the base station to perform processing operations on the base station in the foregoing method embodiments. The part 1420 is mainly configured to store computer program code and data.

The part 1430 is mainly configured to receive and send a radio frequency signal, and perform conversion between the radio frequency signal and a baseband signal. The part 1430 may be usually referred to as a transceiver module, a transceiver machine, a transceiver circuit, a transceiver, or the like. The transceiver module in the part 1430 may also be referred to as a transceiver machine, a transceiver, or the like, and includes an antenna 1433 and a radio frequency circuit (not shown in the figure). The radio frequency circuit is mainly configured to perform radio frequency processing. Optionally, a component configured to implement a receiving function in the part 1430 may be considered as a receiver, and a component configured to implement a sending function may be considered as a transmitter. In other words, the part 1430 includes the receiver 1432 and the transmitter 1431. The receiver may also be referred to as a receiving module, a receiver device, a receiver circuit, or the like. The transmitter may be referred to as a transmitting module, a transmitter device, a transmitter circuit, or the like.

The part 1410 and the part 1420 may include one or more boards, and each board may include one or more processors and one or more memories. The processor is configured to: read and execute a program in the memory, to implement a baseband processing function and control the base station. If there are a plurality of boards, the boards may be interconnected with each other to enhance a processing capability. In an optional implementation, a plurality of boards may share one or more processors, or a plurality of boards share one or more memories, or a plurality of boards share one or more processors at the same time.

For example, in an implementation, the transceiver module in the part 1430 is configured to perform a process related to sending and receiving performed by the base station in embodiments shown in FIG. 7, FIG. 8, FIG. 10, and FIG. 11. The processor in the part 1410 is configured to perform a process related to processing performed by the base station in embodiments shown in FIG. 7, FIG. 8, FIG. 10, and FIG. 11.

It should be understood that FIG. 14 is merely an example rather than a limitation, and a network device including the processor, the memory, and the transceiver may not depend on the structure shown in FIG. 14.

When the apparatus 1400 is a chip, the chip includes a transceiver, a memory, and a processor. The transceiver may be an input/output circuit or a communication interface. The processor is a processor, a microprocessor, or an integrated circuit integrated on the chip. A sending operation performed by the base station in the foregoing method embodiments may be understood as output of the chip, and a receiving operation performed by the base station in the foregoing method embodiments may be understood as input of the chip.

This application further provides a computer-readable storage medium. The computer-readable storage medium stores a computer program or instructions. When the computer program or the instructions are run on a computer, the computer is enabled to perform the method in the foregoing embodiments. For example, when the computer program is executed by a computer, the computer is enabled to implement the method performed by the base station or the UE in the foregoing method embodiments.

This application further provides a computer program product. The computer program product includes a computer program or instructions. When the computer program or the instructions are run on a computer, the method in the foregoing embodiment is performed.

This application further provides a communication system, including the transmitting end, the RIS, and the receiving end.

This application further provides a chip. The chip includes a communication interface and a processor. The communication interface is configured to receive and send a signal of the chip. The processor is configured to execute a computer program or instructions, so that a communication apparatus including the chip performs the methods in the foregoing embodiments.

An embodiment of this application further provides a chip apparatus, including a processor, configured to invoke a computer program or computer instructions stored in a memory, so that the processor performs the methods provided in embodiments shown in FIG. 4, FIG. 5, FIG. 7, FIG. 8, FIG. 9, FIG. 10, and FIG. 11.

In a possible implementation, input of the chip apparatus corresponds to a receiving operation in any one of embodiments shown in FIG. 4, FIG. 5, FIG. 7, FIG. 8, FIG. 9, FIG. 10, and FIG. 11, and output of the chip apparatus corresponds to a sending operation in any one of embodiments shown in FIG. 4, FIG. 5, FIG. 7, FIG. 8, FIG. 9, FIG. 10, and FIG. 11.

Optionally, the processor is coupled to the memory through an interface.

Optionally, the chip apparatus further includes the memory, and the memory stores the computer program or the computer instructions.

The processor mentioned anywhere above may be a general-purpose central processing unit, a microprocessor, an application-specific integrated circuit (application-specific integrated circuit, ASIC), or one or more integrated circuits configured to control program execution of the method provided in any one of embodiments shown in FIG. 4, FIG. 5,

FIG. 7, FIG. 8, FIG. 9, FIG. 10, and FIG. 11. The memory mentioned anywhere above may be a read-only memory (read-only memory, ROM), another type of static storage device that can store static information and instructions, a random access memory (random access memory, RAM), or the like.

It may be clearly understood by persons skilled in the art that, for convenience and brief description, for explanations on and beneficial effects of related content in any apparatus provided above, reference may be made to the corresponding method embodiments provided above. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the mutual coupling or direct coupling or communication connection shown or discussed may be indirect coupling or communication connection through some interfaces, apparatuses, or units, and may be in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments. In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the contributing part, or all or some of the technical solutions may be implemented in a form of a software product. The computer software product is stored in a storage medium and includes several computer programs or instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof. These modifications or replacements do not make the essence of the corresponding technical solutions depart from the scope of the technical solutions of embodiments of this application.

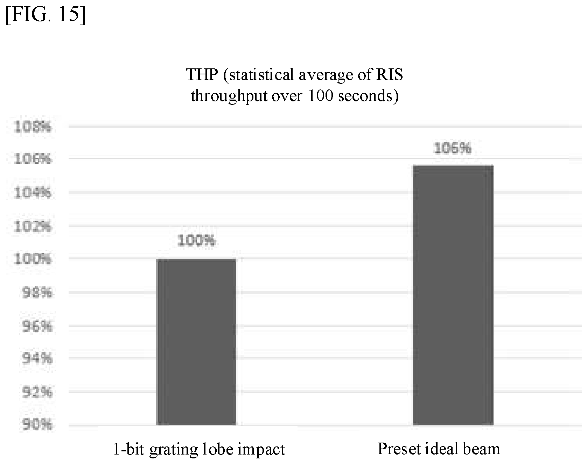

Technical effects of the technical solutions provided in this application may be reflected using the following simulation diagram (that is, FIG. 15). FIG. 15 is a simulation diagram of existing 1-bit RIS beam measurement and 1-bit RIS beam measurement provided in this application according to an embodiment of this application. As shown in FIG. 14, it is assumed that a system throughput (throughput, THP for short) is 100% when existing 1-bit RIS beam measurement (that is, 1-bit grating lobe impact) is used, and a system throughput is 106% when 1-bit RIS beam measurement provided in this application (that is, a preset ideal beam shown in FIG. 14) is used. The preset ideal beam is a beam obtained after eliminating grating-lobe-induced jumps through the 1-bit RIS beam measurement provided in this application, that is, a target beam. Refer to FIG. 15. It can be learned that the 1-bit RIS beam measurement provided in this application can increase a system throughput by 6% compared with the existing 1-bit RIS beam measurement. All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer programs or instructions. When the computer programs or the instructions are loaded and executed on a computer, the procedures or functions in embodiments of this application are completely or partially performed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by a computer, or a data storage device, for example, a server or a data center, integrating one or more usable media. The usable medium may be a magnetic medium, for example, a floppy disk, a hard disk, or a magnetic tape, may be an optical medium, for example, a digital video disc, or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

## Claims

1. A beam measurement method, comprising:
receiving a plurality of measurement reference signals sent by a transmitting end via a reconfigurable intelligent surface RIS;
determining a target beam based on a first beam direction and measurement results of the plurality of measurement reference signals, wherein the first beam direction is determined based on a relative position and/or a relative direction between the transmitting end and the RIS; and
sending a measurement result of the target beam.

2. The method according to claim 1, wherein an included angle between the first beam direction and a normal direction of the RIS is equal to an included angle between an incident direction of a transmit beam of the transmitting end and the normal direction of the RIS, or a difference between the included angle between the first beam direction and the normal direction of the RIS and the included angle between the incident direction of the transmit beam of the transmitting end and the normal direction of the RIS is less than a preset value, or the first beam direction and the incident direction of the transmit beam of the transmitting end are symmetric with respect to the normal direction of the RIS.

3. The method according to claim 1 or 2, wherein before determining the target beam based on the first beam direction and the measurement results of the plurality of measurement reference signals, the method further comprises:
receiving first indication information from the transmitting end or the RIS, wherein the first indication information indicates at least one of the relative position and the relative direction between the transmitting end and the RIS, or the first indication information indicates at least one of an azimuth of the RIS, a panel orientation of the RIS, a height of the RIS, a panel pitch angle of the RIS, or a distance between the RIS and the transmitting end; and
determining the first beam direction based on the first indication information.

4. The method according to claim 3, wherein before receiving the first indication information from the transmitting end or the RIS, the method further comprises:
sending a first trigger request to the transmitting end or the RIS, wherein the first trigger request is for triggering the transmitting end or the RIS to send the first indication information.

5. The method according to claim 4, wherein sending the first trigger request to the transmitting end or the RIS comprises:
sending the first trigger request to the transmitting end or the RIS based on reception performance or a mobility status of a receiving end; or
sending the first trigger request to the transmitting end or the RIS when a receiving end determines that beam scanning needs to be performed.

6. The method according to claim 1 or 2, wherein before determining the target beam based on the first beam direction and the measurement results of the plurality of measurement reference signals, the method further comprises:
receiving second indication information from the transmitting end or the RIS, wherein the second indication information indicates the first beam direction.

7. The method according to claim 6, wherein before receiving the second indication information from the transmitting end or the RIS, the method further comprises:
sending a second trigger request to the transmitting end or the RIS, wherein the second trigger
request is for triggering the transmitting end or the RIS to send the second indication information.

8. The method according to claim 7, wherein sending the second trigger request to the transmitting end or the RIS comprises:
sending the second trigger request to the transmitting end or the RIS based on reception performance or a mobility status of a receiving end; or
sending the second trigger request to the transmitting end or the RIS when the receiving end determines that beam scanning is to be performed.

9. The method according to any one of claims 1 to 8, wherein determining the target beam based on the first beam direction and the measurement results of the plurality of measurement reference signals comprises:
determining the target beam based on the measurement results of the plurality of measurement reference signals, the first beam direction, and an order in which the transmitting end sends the plurality of measurement reference signals.

10. The method according to claim 9, wherein determining the target beam based on the measurement results of the plurality of measurement reference signals, the first beam direction, and the order in which the transmitting end sends the plurality of measurement reference signals comprises:
determining, based on the first beam direction, an angular region to which the target beam belongs; and
determining, from a plurality of beams associated with the plurality of measurement reference signals, a beam that is located within the angular region and whose first performance metric is greater than or equal to a target threshold as the target beam.

11. The method according to claim 9, wherein determining, by the receiving end, the target beam based on the measurement results of the plurality of measurement reference signals, the first beam direction, and the order in which the transmitting end sends the plurality of measurement reference signals comprises:
determining the target beam based on the measurement results of the plurality of measurement reference signals, the first beam direction, the order in which the transmitting end sends the plurality of measurement reference signals, and a relative position relationship between the receiving end and the RIS.

12. The method according to claim 11, wherein determining the target beam based on the measurement results of the plurality of measurement reference signals, the first beam direction, the order in which the transmitting end sends the plurality of measurement reference signals, and the relative position relationship between the receiving end and the RIS comprises:
determining, based on the first beam direction and the relative position relationship, an angular region to which the target beam belongs; and
determining, from a plurality of beams associated with the plurality of measurement reference signals, a beam that is located within the angular region and whose first performance metric is greater than or equal to a target threshold as the target beam.

13. The method according to any one of claims 9 to 12, wherein the method further comprises:
receiving third indication information from the transmitting end, wherein the third indication information indicates the order in which the transmitting end sends the plurality of measurement reference signals.

14. The method according to claim 13, wherein the third indication information further indicates a mode in which the receiving end performs beam measurement.

15. The method according to claim 13 or 14, wherein the order in which the transmitting end sends the plurality of measurement reference signals to the receiving end is an order of codewords in a scanning codebook used by the receiving end, and one codeword in the scanning codebook corresponds to one of the plurality of measurement reference signals.

16. A communication apparatus, comprising a module configured to implement the method according to any one of claims 1 to 15.

17. A computer-readable storage medium, wherein the computer-readable storage medium stores a computer program, the computer program comprises program instructions, and when the program instructions are executed by a processor, the method according to any one of claims 1 to 15 is performed.

18. A communication apparatus, comprising a processor, wherein when the processor is configured to execute instructions, the communication apparatus is enabled to perform the method according to any one of claims 1 to 15.

19. A chip, comprising:
a communication interface, configured to receive and send a signal of the chip; and
a processor, configured to execute computer program instructions, to enable a communication
apparatus comprising the chip to perform the method according to any one of claims 1 to 15.

20. A computer program product, wherein when the computer program product runs on a computer, the computer is enabled to perform the method according to any one of claims 1 to 15.
